Europäisches Patentamt

European Patent Office

Office européen des brevets

(19)

(11) **EP 1 134 918 A1**

(12) **EUROPEAN PATENT APPLICATION**
published in accordance with Art. 158(3) EPC

(43) Date of publication:
**19.09.2001 Bulletin 2001/38**

(51) Int Cl.⁷: **H04H 1/00**, H04N 7/173

(21) Application number: **00961059.3**

(86) International application number:
**PCT/JP00/06357**

(22) Date of filing: **18.09.2000**

(87) International publication number:
**WO 01/22631 (29.03.2001 Gazette 2001/13)**

(84) Designated Contracting States:
**AT BE CH CY DE DK ES FI FR GB GR IE IT LI LU
MC NL PT SE**

(30) Priority: **17.09.1999 JP 26376199**

(71) Applicant: **Sony Corporation
Tokyo 141-0001 (JP)**

(72) Inventor: **USUDA, Hiroshi C/o Sony Corporation
Shinagawa-ku, Tokyo 141-0001 (JP)**

(74) Representative:
**Robinson, Nigel Alexander Julian et al
D. Young & Co.,
21 New Fetter Lane
London EC4A 1DA (GB)**

(54) **DATA DISTRIBUTION METHOD AND APPARATUS, AND DATA RECEPTION METHOD AND APPARATUS**

(57)     A plural number of information provided matching the output attributes and/or contents attributes are contained a single data content for distribution to be distributed. The handling of distribution contents is simplified at the distributor. Since each information provided matching the output attributes of displays outputting the distribution contents is divided by tags, it is possible to separate them easily for processing. As the expression format matching the output attributes is prescribed by style sheets, all that is required on the receiving system side is to selectively store style sheets matching the contents attributes of the distribution contents, or the output attributes of the output apparatus.

**FIG.10**

**Description**

Technical Field

The present invention relates to digital data distribution technologies such as digital satellite broadcast or multimedia contents communication, and in particular to the technology of distributing digital data composed of computer language commands having data attributes. The digital data composed of computer language commands having data attributes are entered for example in the form of language composed of tag data that are divided by tags defining the data attribute (or "markup language").

To describe in more details, the present invention relates to the technology of distributing data contents of a language format using arbitrarily definable tags (for example, XML (eXtensible Markup Language)) in the form of data broadcast or other similar forms and of receiving and displaying the same, and in particular the technology of distributing and selecting style sheets for prescribing the expression format of XML instances, or XSL (eXtensible Style sheet Language) documents.

Background Art

In the technical field of broadcasting, the digitalization of data is rapidly progressing. Digital signals are superior to analog signals in terms of stability and the compressibility of data is higher. And digital signals, whether they may be cable, ground wave or satellite wave, can secure more channels than analog signals in certain bands. In addition, while various information in the form of documents, voice and picture are completely separate in the conventional information transmission, the digitalization of broadcast data enables to transmit these monomedia data indiscriminately.

For example, in the case of a digital broadcast, it is possible to improve services to users (viewers) by sending EPG (Electric Program Guide) and other system information as one of the data broadcast contents together with image information and voice information (EPG includes the functions of video recording reservation in addition to the indication of broadcast schedule, name of broadcast programs and other information provided).

Data in digital format have a high affinity with general-purpose computer systems and other information equipment other than TV. For example, it is possible to equip a general-purpose computer system with a tuner card for satellite broadcast, to parse the EPG data received in the computer, process the same for display, and to display program tables and other menu screens on a window. On such a menu screen, it is possible to switch programs and reserve video recording by intuitively operating the mouse cursor or the touch panel. Of course, it is possible to store the data broadcast contents received as they are on a hard disc integrated in a computer and to reproduce or reuse the data.

And in digital broadcast, it is possible to enhance the interaction of broadcast programs by taking advantage of the band used and by transmitting data other than image and voice broadcast programs. For example, in a broadcast program in which true-false quizes are given, the transmission of answers as well as image and voice data will enable the satellite TV broadcaster receivers (viewers) to provide answer menu buttons on the computer display and to check the answers in response to the responding operation of the users by means of the mouse cursor or the touch panel.

When the interaction is further enhanced, home TV receivers are expected to play an active role as an information controller not just handle image contents. For example, a TV receiver can serve as an internet terminal and an electronic commerce terminal.

In Japan, ARIB (Association of Radio Industries and Businesses) is playing a central role in promoting the standardization program related to digital satellite data broadcast. According to this, in digital satellite broadcast, in addition to the image and voice data constituting the main body of the broadcast program (AV data), digital transfer data accessory to the broadcast program are distributed. More specifically, data were transmitted as broadcast wave in the form of "transport stream (described below)" obtained by multiplexing AV data compressed by the specified compression method such as MPEG (Motion Picture Experts Group) 2 and digital transfer data.

An example of broadcast program information transmitted as data broadcast contents is the aforementioned EPG (Electric Program Guide). And it is possible to include information inherent to the main body of the broadcast program such as the title and date of the main body of the broadcast program as well as program casting. And the types and construction of data contained in the broadcast program information are systematized to some extent in accordance with the service contents provided by the main body of the program. For example, information related to the recipes and food materials in a cooking program, the number of votes obtained renewed constantly in a prompt report of election returns program, and individual records of batting and pitching of various players and team ranking in a professional baseball game relay broadcast.

Broadcast program information is displayed by using a part of the display screen on which the main body of the broadcast program is outputted/displayed on the side of the digital satellite data broadcast receiving system (hereinafter referred simply to as "the receiving system") side. This receiving system is normally composed by a receiver for receiving, tuning and decoding the broadcast wave (set top box: STB) and a TV for displaying/outputting and is installed at the home of general audience.

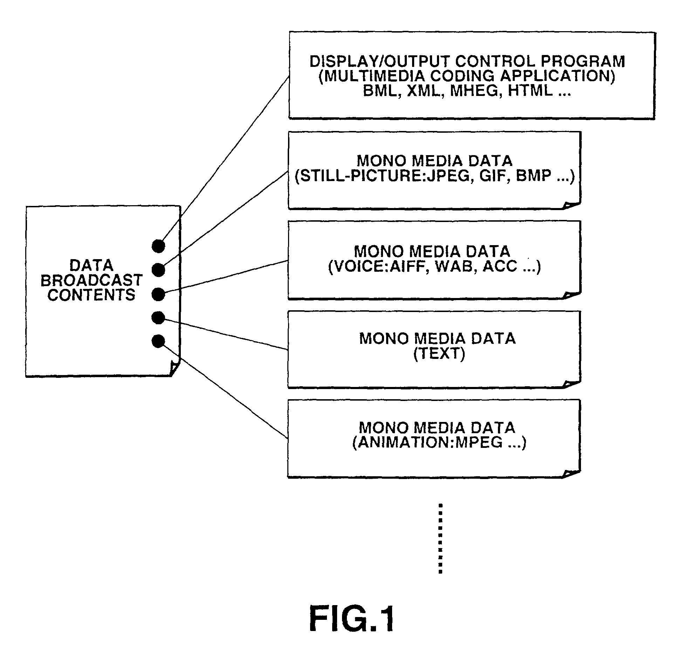

And now, the construction of contents distributed as digital broadcast data (hereinafter referred to as "data broadcast contents") will be explained by referring to Fig. 1.

As shown in Fig. 1, the data broadcast contents consist of a large variety of monomedia data including text data, still pictures, animations, voices, etc. and a display and output control program that prescribes the state of broadcast program information by handling integrally each of these monomedia data or as multimedia data (generally referred to as "multimedia coding application"). It is possible to integrate link information corresponding to each monomedia information to the display output control program.

In the standardization of digital satellite data broadcast work undertaken by the aforementioned ARIB, as a format for describing the multimedia coding application" for these data broadcast contents, at first the use of MHEG (Multimedia and Hypermedia Expert Group) was examined. MHEG is a type of descriptive languages that define data attributes, displays multimedia contents on TVs and is designed to allow viewers to obtain their desired information from Video On Demand (VOD) or digital TV broadcast. There are cases where MHEG-5 is already put to practical use as the Japanese CS (Communication Satellite) digital broadcast (SKY Perfect TV).

MHEG, however, has a fixed coding space and lacks in extensibility. In other, as a unilaterally fixed coding space must be used to describe, a change of a single function (for example, API (Application Programming Interface)) requires a considerable amount of correction work. In addition, MHEG is generally little known, and data contents written in MHEG are not circulating in a sufficient quantity. In this sense, it has a relatively low affinity with the general-purpose computers.

As a result, ARIB (aforementioned) is examining the standardization work based on XML (eXtensible Markup Language) in place of MHEG. More specifically, the work is progressing by dividing the same into "the basic XML" (also referred to as BML "Broadcast Markup Language") and "the advanced XML," an extended version of the basic XML.

As XML allows optional definition of tags, or in other words has no restrictions on the way attributes are described, it allows a high degree of freedom, and its high affinity with general-purpose computers and the Internet can be mentioned as its advantages over MHEG. Furthermore, XML is now being elaborated as a descriptive language for the next generation Internet.

When XML is used as the standard language of data broadcast contents, it is possible to exchange data for digital broadcast data among a variety of information equipment such as computer, TV, telephone, etc. In addition, as XML can freely define tag attribute, it is stronger in data processing than HTML (Hyper Text Markup Language). Consequently, its use is rapidly expanding in various fields including electronic commerce.

Document files written in XML format are called "XML instances." The method of writing attribute information (or tag grammar) is governed by a standard rule called DTD (Document Type Definition). For example, it is possible to establish a DTD for every industry (or for every service provided by each industry).

And XML instances themselves do not sometimes contain the style information on the expression form (for example, the form of display/output to displays, the form of print/output to printers, etc.). In this case, the expression method of XML instances is described by the "style sheet" or a document file different from DTD.

The style sheet for XML instances can be written by using in particular languages of the "XSL (eXtensible Style sheet Language), languages of the "CSS (Cascade Style Sheet), or languages of "the XSLT (XSL Transformation) or standard derived from the abovementioned. Or it is also possible to insert a script in a style sheet (the term "script" means a method of executing software described in a text form in the same way as ordinary source programs. A script is used to automatize a series of processing resulting from the combination of operating procedures that users can control (for example, specific keys or buttons) on an application or an OS (Operating System)).

Even if the XML instance may be same, depending on the description in the style sheet concerned, it is possible to express the same XML instance on the display screen by a completely different form of expression by varying the font style, size or color. In other words, a style sheet has the function of giving an added value to the original XML instance. And it can be assumed that the value of style sheets may rise in the future and that attractive style sheets of good presentation would be designed by designers specialized in style sheets.

Style sheets can be transmitted in files separate from XML instances. For example, XML instances themselves may be distributed by data broadcast, while style sheets may be widely distributed by other forms of distribution, for example, portable recording media such as CD (Compact Disc), MO (Magneto-Optical disc), DVD (Digital Versatile Disc) or by file transfers through internet.

In the meanwhile, lately display apparatuses serving as the output target of data broadcast contents have diversified. For example, in addition to the conventional NTSC (National Television System Committee) system color television, HDTV (High Definition Television) with many scanning lines for large screen, PDA (Personal Digital Assistant) with a monochrome liquid crystal display of a small screen size, relatively high definition computer screens such as SVGA (Super Video Graphic Array) or XGA (eXtended Graphic Array) may be mentioned.

Even if the data contents are same, when the display capacity of output targets is different, obviously the optimum form of display is different. For example, a format of display optimum for a high resolution and high definition HDTV is not necessarily appropriate for a low resolution and small screen PDA. As mentioned earlier, the format of expressing contents is prescribed by style sheets. In other words, therefore, the question of which style sheet is appropriate for such contents is determined by the display and output capacity and expression capacity of the display apparatus to which data contents are outputted.

And even if resolution and other hardware capacity of the display apparatus may be identical, the optimum format of display may be different depending on the manufacturer and type of apparatus.

In addition, depending on the attribute of data broadcast contents themselves (for example, data shown by the tags of <POSITION>, <COLOR>, <SIZE>, etc.), optimum style sheet may be different.

And the optimum style sheets or style sheets preferred by the receiving user are not always distributed together with the data broadcast contents.

Disclosure of the Invention

It is therefore an object of the present invention to provide an outstanding data distribution technology capable of providing documents in a language format in which arbitrarily definable tags are used (for example, XML (eXtensible Markup Language) style) in a format matching with each output attribute or contents attribute.

Another object of the present invention is to provide an outstanding data distribution technology capable of providing a single content in a form matching with each output attribute or contents attribute when data are distributed through broadcast or a network.

The present invention was made by taking into account the above objects, and its first aspect is a data distributing method or apparatus for distributing contents consisting of data written in a computer language including the step or means of containing a plurality of information provided matching with the output attributes in a single data content for distribution and the step or means of distributing the data content for distribution.

In the data distribution method or apparatus related to the first aspect of the present invention, the data written in a computer language are, for example, data in the language format using tags, or data in a language format using arbitrarily definable tags. An example of such data is XML instance written in the XML (eXtensible Markup Language) format.

And each of information provided according to the output attributed may be data divided by tags.

If the data contents for distribution are instances written in mark up languages such as XML, it is possible to prescribed their expression format (for example, format of display in a display apparatus, or format outputted and printed by a printer) by a document called "style sheet."

A style sheet may prescribe expression format according to output attributes. The output attributes referred here consist of the resolution, manufacturer's name, model, etc. of the display apparatus used to display the contents data. In other words, it is possible to prepare in advance a large number of style sheets prescribing the optimum expression format for each output attribute such as the resolution, manufacturer's name, model, etc. of the relevant display apparatus.

And style sheets may include scripts. (The term "script" means a method executed by the software described in a text form like ordinary source programs. Scripts are used in order to automatize a series of processing combining operating procedures (for example, specific keys and buttons) that the end users can control on an application or an OS.) In addition to the preparation of a plurality of optimum style sheets for each output attribute, it is possible to describe by a script the expression operation adapted to a plurality of output attributes.

And the second aspect of the present invention is a data receiving method or apparatus for receiving contents consisting of data written in a computer language including the step or means of selecting a style sheet matching with contents identification information and the step or means of processing received data contents using the selected style sheet.

In the data distributing method or apparatus related to the second aspect of the present invention, data written in the computer language are data in the language format using tags, or data in the language format using arbitrary definable tags. An example of such data is XML instance written in the XML (eXtensible Markup Language) format.

If the distributed data contents are instances written in mark up languages such as XML, it is possible to prescribe their expression form (for example, format of display in a display apparatus, or format outputted and printed by a printer) by a document called "style sheet."

A style sheet may prescribe expression format matching with the output attribute. The contents identification information referred here represents the contents attributes and are decided, for example, based on the specified tag data in the XML instances taken as contents. Examples of such tag data are <POSITION>, <COLOR>, <SIZE>, etc. In other words, it is possible to prepare in advance a large number of style sheets prescribing the optimum expression format for each output attribute.

And style sheets may include scripts. (The term "script" means a method executed by the software described in a text form like ordinary source programs. Scripts are used in order to automatize a series of processing combining operating procedures (for example, specific keys and buttons) that the end users can control on an application or an OS.) In addition to the preparation of a plurality of optimum style sheets for each output attribute, it is possible to describe by a script the expression format matching with a plurality of output attributes.

And the third aspect of the present invention is a data receiving method or apparatus for receiving contents consisting of data written in a computer language and outputting the same in a output apparatus including the step or means of storing the output attribute information related to said output apparatus, the step or means of selecting a style sheet matching with the stored output attribute information, and the step or means of processing the received data contents using the selected style sheet.

In the data distributing method or apparatus related to the third aspect of the present invention, data written in a computer language are data in the language format in which tags are used, or data in the language format using arbitrarily definable tags. An example of such data is XML instance written in the XML (eXtensible Markup Language) format.

If the received data contents are instances written in mark up languages such as XML, it is possible to prescribe their expression format (for example, format of displays in a display apparatus, or format outputted and printed by a printer) by a document called "style sheet."

A style sheet may prescribe expression formats in accordance with the output attribute. The output attributes referred here consist of the resolution, manufacturer's name, model, etc. of the display apparatus used to display the contents data. In other words, it is possible to prepare in advance a large number of style sheets prescribing the optimum expression format for each output attribute such as the resolution, manufacturer's name, model, etc. of the display apparatus.

And style sheets may include scripts. In addition to the preparation of a plurality of optimum style sheets for each output attribute, it is possible to prescribe by a script the expression format matching with a plurality of output attributes.

And the data receiving method or apparatus related to the third aspect of the present invention may include a step or means of retrieving a style sheet matching on the network, when a style sheet matching with the output attribute information stored in said step or means of selecting style sheet cannot be selected. Or, a step or means of obtaining a matching style sheet through a portable recording medium may be provided when a style sheet matching with the output attribute information stored in said step or means of selecting style sheet cannot be selected.

And, the fourth aspect of the present invention is a data receiving method or apparatus for receiving contents consisting of data written in a computer language including the step or means of selecting a style sheet matching with contents identification information and the step or means of processing received data contents using the selected style sheet.

In the data distributing method or apparatus related to the fourth aspect of the present invention, data written in a computer language are data in the language format using tags, or data in the language format using arbitrarily definable tags. An example of such data is XML instance written in the XML (eXtensible Markup Language) format.

A style sheet may prescribe expression forms adapted to the output attribute. The output attribute information referred here indicates the contents attributes, and are determined on the basis of specified tag data in the XML instances forming part of the contents. Examples of these tag data are <POSITION>, <COLOR>, <SIZE>, etc. In other words, it is possible to prepare in advance a large number of style sheets prescribing optimum expression forms for every content attribute.

And style sheets may include scripts. In addition to the preparation of a plurality of optimum style sheets for each output attribute, it is possible to describe by a script the expression operation matching with a plurality of output attributes.

And the data receiving method or apparatus related to the fourth aspect of the present invention may include a step or means of retrieving a style sheet matching on the network, when a style sheet matching with the output attribute information stored in said step or means of selecting style sheet cannot be selected. Or, a step or means of obtaining a matching style sheet through a portable recording medium may be provided when a style sheet matching with the output attribute information stored in said step or means of selecting style sheet cannot be selected.

And the fifth aspect of the present invention is a data receiving method or apparatus for receiving contents consisting of data written in a computer language including the step or means of selecting a style sheet matching with contents identification information, the step or means of retrieving style sheets matching with the stored output attribute information from among the style sheet server providing style sheets on the network, and the step or means of processing received data contents using the style sheet obtained by retrieval.

And the sixth aspect of the present invention is a style sheet providing method or server providing style sheets through networks including the step or means of storing one or more style sheets prescribing the expression format for each output attribute of various output apparatus, the step or means of receiving the requests for the provision of style sheets in a format including information on output attributes, and the step or means of extracting a style sheet matching with the output attribute specified by the request for provision.

And the seventh aspect of the present invention is a data receiving method or apparatus for receiving contents composed of data written in a computer language and outputting the same an output apparatus including the step or means for storing contents attributes related to the contents received, the step or means of retrieving style sheets matching with the contents attributes information stored in the style sheet server providing style sheets on the network, and the step or means of processing the data contents received using the style sheet obtained by retrieval.

The eighth aspect of the present invention is a style sheet providing method or server for providing style sheets through a network including the step or means of storing one or more style sheets prescribing the expression format for each contents attribute, the step or means of receiving requests for the provision of style sheets in a format including information on contents attributes, and the step or means of extracting a style sheet matching with the output attribute specified by the supply request.

And the ninth aspect of the present invention is a data contents processing system for distributing, receiving and processing contents composed of data written in a computer language and outputting the same to an output apparatus including a means of distributing a plurality of information provided according to the contents attributes and/ or output attributes contained in a single data contents for distribution, a means of storing output attributes information concerning said output apparatus and/or contents attributes concerning the data contents received, a means of selecting style sheets matching with the output attributes information and/or contents attributes stored, and a means of processing the data contents received using the style sheet selected.

And the tenth aspect of the present invention is a data contents processing system for distributing, receiving and processing contents composed of data written in a computer language and outputting the same to a output apparatus including a means of distributing a plurality of information provided in accordance with the contents attributes and/or output attributes contained in a single data content for distribution, a means of storing the output attributes information concerning said output apparatus and/or the contents attributes concerning the data contents received, of requesting style sheets matching with the output attribute information and/or contents attributes stored, and of processing the data contents received using style sheets provided, a means of storing one or more style sheets prescribing the expression format for each output attribute and/or each contents attribute that each output apparatus has, and of providing style sheets of formats containing information on the output attribute and/or contents attribute in response to requests for the same.

And the eleventh aspect of the present invention is a program recording medium for recording in a tangible and computer-readable format a computer program for executing on a computer system a data distribution process for distributing contents composed of data written in a computer language, said computer program including the step of including a plurality of information provided matching with output attributes and/or contents attributes in a single data content for distribution, and the step of distributing the step of the data content for distribution.

And the twelfth aspect of the present invention is a program recording medium for recording in a tangible and computer-readable format a computer program for executing on a computer system the process of receiving contents composed of data written in a computer language and outputting the same on an output apparatus, said computer program including the step of storing output attributes information on said output apparatus and/or contents attributes on contents received, and the step of selecting style sheets matching with output attributes information and/or contents attributes stored, and the step of processing the data contents received using the style sheets selected .

And the thirteenth aspect of the present invention is a program recording medium providing in a tangible and computer-readable format a computer program for executing on a computer system the process of providing style sheets supplied through a network, said computer program including the step of storing one or more style sheets prescribing the expression format of the output attributes of each output apparatus and each content attribute of contents for distribution, the step of receiving requests for the provision of style sheets in a format including information on the output attributes and/or contents attributes, and the step of extracting and transmitting style sheets matching with the output attributes and/or contents attributes specified by the requests for provision.

According to the data distribution method or apparatus related to the present invention, a plurality of information provided in accordance with the output attributes on the receiver/decoder side and the attributes of data contents to be provided (for example, data broadcast contents) are contained in a single data content for distribution and are distributed as such. As a result, the handling of distribution contents is facilitated at data distributors (for example broadcast servers).

Since each information provided matching with the output attributes and contents attributes in the data contents distributed are data divided by tags, each of the data can be processed separately.

The format of providing information in accordance with output attributes and contents attributes, or expression format, is prescribed by style sheets. Therefore, by selectively using style sheets, the format of providing information adapted to output attributes and contents attributed can be prepared in advance.

And according to the data receiving method or apparatus related to the present invention, upon receiving a single distribution data content including a plurality of information provided matching with output attributes or contents attributes, it can be converted into a specified expression format by using selectively a style sheet matching with the contents received and can be displayed on a display.

And according to the data receiving method or apparatus related to the present invention, when one or more style sheets are supplied through data broadcast, the Internet, portable recording medium, and other various forms, the optimum style sheet matching with the output attributes (for example resolution, manufacture's name, model name, etc.) of an output apparatus provided on the receiver/decoder (for example, display apparatus of a TV) can be selectively stored. In other words, receiver/decoder users can benefit from the possibility of contents being displayed in the optimum format for the display apparatus.

And users may use the user interface on their receiver/decoder to personally select a style sheet matching with the contents distributed.

When the present invention is applied to a satellite or ground wave broadcast business, it is possible to provide information matching with a plurality of output attributes and contents attributes based on a single data broadcast content.

And when the present invention is applied to the distribution of information through the Internet, it is possible to realize the output of contents in the optimum output format (for example display on the screen) by judging the output attributes or contents attributes through the input screen on the home page.

The program recording media according to each of the eleventh to thirteenth aspects of the present invention are media providing computer programs in a tangible and computer-readable format to, for example, a general-purpose system capable of executing various program codes. The recording media may be detachable and portable recording media such as CD (Compact Disc), FD (Floppy Disc) and MO (Magneto-Optical disc).

Such recording media define the structurally or functionally synergetic relationship between certain specified computer programs and the recording media in order to realize the functions of computer programs on the computer system. In other words, the installation of specified computer programs in the computer system through program recording media according to each of the eleventh to thirteenth aspects of the present invention leads to synergy on the computer system, and produces effects similar to the first to fourth aspects, or the sixth and eighth aspects.

Brief Descriptions of Drawings

Fig. 1 is a schematic drawing showing the construction of data broadcast contents.

Fig. 2 is a drawing showing the schematic configuration of a digital satellite data broadcast system 1000 designed for carrying out the present invention.

Fig. 3 is a schematic drawing showing the broadcast contents diffused as broadcast wave in the digital satellite data broadcast.

Fig. 4 is a schematic drawing showing the construction of data in data modules contained in digital transfer data.

Fig. 5 is a schematic drawing showing the configuration for transmitting digital transfer data in Broadcast Server 1, a transmitting system.

Fig. 6 is a schematic drawing showing the hardware configuration of an example of receiving system 10-A at a receiver/decoder 10 (or general household), and more specifically a drawing showing the configuration of a receiving system 10-A executed in the form of STB (Set Top Box).

Fig. 7 is a schematic drawing showing the hardware configuration of a receiving system 10-B related to another example, and more specifically a drawing showing the hardware configuration of a receiving system 10-B executed in the form of equipping a general-purpose computer with a tuner card for satellite digital broadcast.

Fig. 8 is a schematic drawing showing the hierarchical configuration of various software programs executed in the digital broadcast data receiving system 10.

Fig. 9 is a schematic drawing showing the way data broadcast contents are transferred to the receiver/decoder 10 from the broadcast server 1 through a broadcast satellite 5.

Fig. 10 is a schematic illustration of the method of selecting style sheets in the receiving system 10.

Fig. 11 is a drawing showing a configuration example of a determination logic 84.

Fig. 12 is an illustration of the procedure of processing the received data broadcast contents in the receiving system 10.

Fig. 13 is a schematic drawing of the document construction of XML instances handled in this embodiment.

Fig. 14 is drawing showing an example of processing described in Java script adapted to the output attribute and/or contents attribute.

Fig. 15A, 15B and 15C are drawings showing examples of how display formats related to the same information service are switched by Java script.

Best mode for Carrying out the Invention

A specified structure of the present invention is hereinafter explained with reference to the drawings.

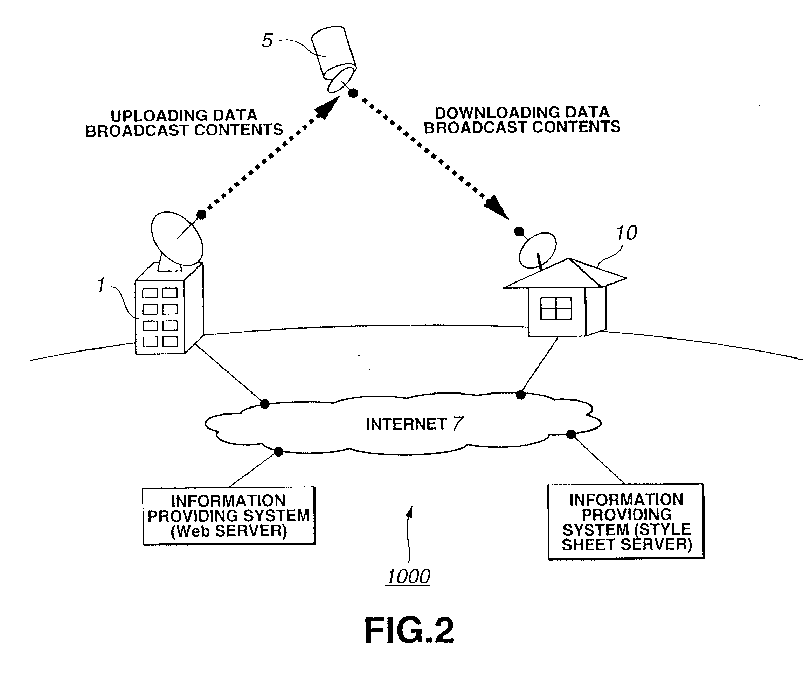

Fig. 2 shows the schematic configuration of a satellite digital broadcast system 1000 designed for carrying out the present invention. As shown in the drawing, the satellite digital broadcast system 1000 comprises a Broadcast Server 1 providing broadcast services, a Broadcast Satellite 5 relaying broadcast data, and a Receiver/ Decoder 10 receiving the broadcast data from the Broadcast Satellite 5.

There is one or more Broadcast Server or Servers 1 on earth, the Broadcast Satellites 5 are scattered far above the earth. And the Receiver/Decoder 10 correspond to households in general and are actually omnipresent in an unlimited number on earth. The distribution of data through the Broadcast Server 1 and the Broadcast Satellites 5 or broadcast is one-way communication.

In digital data broadcast, data are transferred at a transfer rate of 10 ~ 50 Mbps. The Broadcast Server 1 multiplexes AV (audio and visual) data constituting the main body of broadcast programs and data broadcast contents including program information accessory to the broadcast programs and distributes the same. AV data are normally compressed by the MPEG (Motion Picture Experts Group) 2 format to be transmitted.

Data broadcast contents store modules consisting of various monomedia data including text, still picture, animation and voice data and a program for controlling the display and output of these monomedia data or "multimedia coding application" in a form of data carousel.

The multimedia coding application is described in the XML (eXtensible Markup Language) language format and includes a DTD document defining the document format (however, DTD documents and/or style sheets are not sometimes included in the contents for distribution). And each module include a script prescribing voices, still pictures and movements in animations.

Each Receiver/Decoder 10 and Broadcast Server 1 may be linked bidirectionally by a wide area network 7 such as Internet or by a leased line (not shown). In this case, Internet 7 may be used as the upward line from the Receivers/Decoders 10 to the Broadcast Server 1. For example, it is possible to provide partially on-demand broadcast services using Internet 7. In this case, however, it is preferable that they be linked with a high-speed analogue telephone line of 56 Kbps or more, a high-speed wireless communication of about 10~64 Kbps, a 128 Kbps ISDN (Integrated Services Digital Network) or a 5~30 Mbps class cable.

As is known already, innumerable hosts (i.e., computer systems) are scattered on the Internet 7 and are connected by for example TCP/IP (Transmission Control Protocol/Internet Protocol). Some of the hosts are servers that provide information to other servers for a consideration or free of charge.

Typical examples of servers on the Internet 7 are Web servers (or WWW (World Wide Web) servers) that provide HTTP (Hyper Text Transfer Protocol) objects described in the HTML (Hyper Text Markup Language) for a consideration or free of charge. And in this embodiment, it is assumed that "a Style Sheet Server" (provisional name) distributing style sheets for a consideration or free of charge through the Internet 7 exists.

In Japan, ARIB (Association of Radio Industries and Businesses) took the initiative to pursue standardization works related to digital satellite data broadcast. According to this, in digital satellite data broadcast, real-time AV data constituting the main body of satellite broadcast programs and data broadcast contents accessory to the broadcast programs are distributed in parallel.

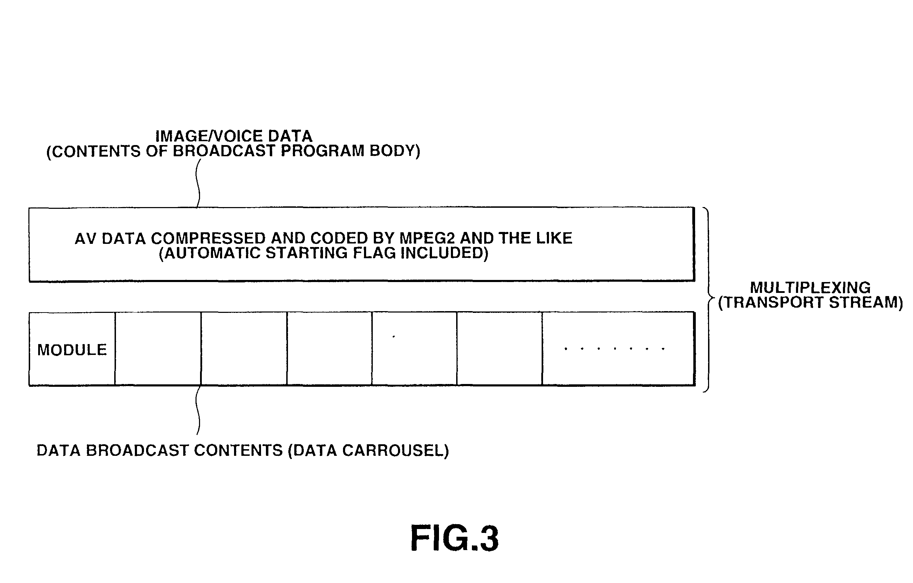

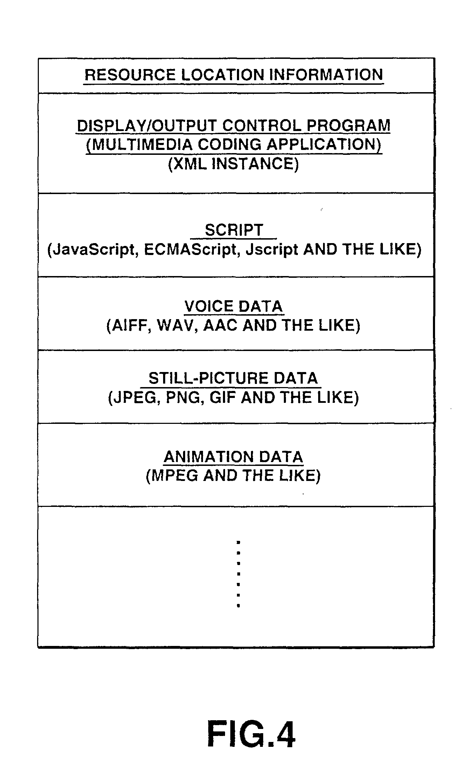

Here, the construction of contents distributed by the digital satellite data broadcast will be explained with reference to Fig. 3 and Fig. 4.

Fig. 3 shows schematically the construction of broadcast contents diffused as broadcast waves in the digital satellite data broadcast. As shown therein, broadcast contents are constituted as "a transport stream" obtained by multiplexing real-time AV data compressed by a specified compression method such as MPEG (Motion Picture Experts Group) 2 and data broadcast contents (the transport stream is broken into the transport layers of the OSI (Open Systems Interconnection) reference model). The former real-time AV data constitute the main body of satellite broadcast programs, and the latter data broadcast contents constitute broadcast program information accessory to the main body of broadcast programs and other data broadcast services.

The portion of data broadcast contents consists of a plurality of data modules. Each data module include various types of information accessory to the main body of broadcast programs. An example of broadcast program information is the EPG (Electric Program Guide) (The EPG includes the function of reserving VTR recording in addition to the display of broadcast schedule and program names of broadcast programs). And broadcast program information may include information proper to the main body of broadcast program such as the title and date of the broadcast program and casting of program.

As shown in Fig. 3, portions of such data broadcast contents are transformed into data carousel, and each data module is programmed to appear repeatedly during the broadcast of the main body of the program. As a result, the receiving system 10 can obtain desired data module at an arbitrary timing during the broadcast period of the program, and the memory for cache can be omitted. And it is possible to bury "automatic starting flags" for synchronizing with the display output time of modules in the real-time AV data compressed by MPEG 2 compression method.

Fig. 4 schematically shows the data construction of a data module. As shown in the drawing, a data module consists of a plurality of resource elements including a control program stipulating how the data broadcast should be displayed or outputted (hereinafter referred to as "multimedia coding application"), script stipulating movements, voice, text data, still pictures, animation and other monomedia data. Each monomedia data are objects constituting a part of the data broadcast, and are handled comprehensively by multimedia coding applications.

Each resource element constituting a data module is an independent file having a specified format. Voice data are written by file formats exclusively made for voice such as for example AIFF, WAV, and AAC. And still picture data are written by file formats exclusively made for images such as JPEG, PNG, and GIF. The top resource location information describes the position information of each resource element in the data module.

"Multimedia coding application" is a program for controlling how EPG, advertisement information and other various data broadcast accessory to the main body of broadcast programs should be displayed and outputted. The ARIB is examining the standardization work on data broadcast based on XML (eXtensible Markup Language) as a format for describing multimedia coding applications.

XML is a description language wherein tags are freely defined, in other words attributes can be described without restrictions. It allows therefore a high degree of freedom, and is highly affinitive with general-purpose computers and the Internet. Allowance of optional definition of tags means, in other words, the intention of handling a string of characters written in a document as data to which meanings are assigned. In other words, the definition of tags enables to express each tag data divided by a tag as data having a meaning other than simple purpose of displaying. In addition, the definition of tag construction enables to structurize and describe XML instances and data in such instances.

Distribution contents described in the XML language format are given meanings according to the tag definition. As a result, data made originally for digital broadcast are can be exchanged among a variety of information devices such as computers, TV, telephones, etc.

The definition of tags, or the definition of document formats in XML instances are described in DTD (Document Type Definition) documents. In addition, as XML instances themselves do not contain style information specifying actual format of expression, style sheets may be attached thereto. Style sheets are written in XSL (eXtensible Style Sheet Language), CSS (Cascade Style Sheet) language, or XSLT (XSL Transformation) which is a standard derived from the XSL.

And separately from style sheets, scripts stipulating the movements of multimedia contents consisting of various monomedia data including voice, text, still pictures, animation, etc. can be used.

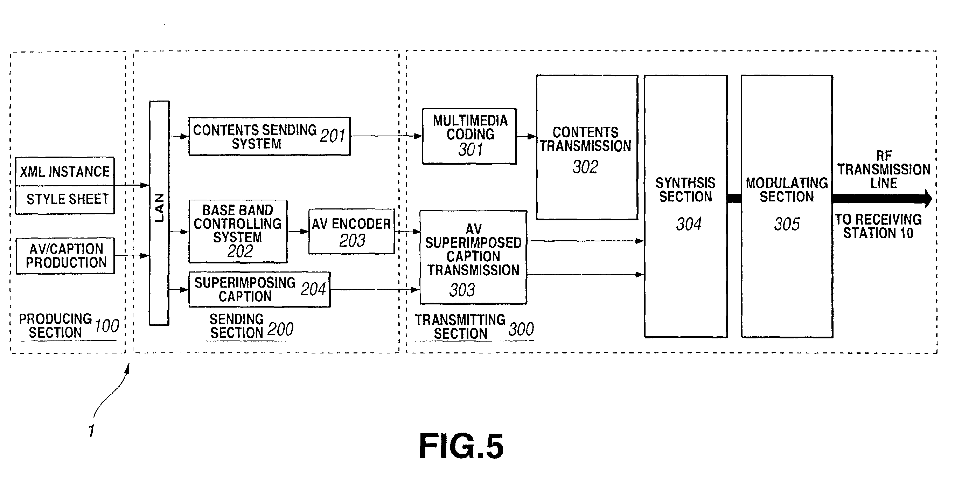

Fig. 5 shows schematic configuration for transmitting data broadcast contents in the Broadcast Server 1 or transmitting system. The broadcast system 1 is composed of the Production Section 100, the Outgoing Section 200 and the Transmission Section 300. Explanations on each section follow.

The Production Section 100 corresponds to the site where each content of the broadcast program information to be sent out as data broadcast contents is produced. In other words, the Production Section 100 produces various resource elements constituting a data module such as XML (eXtensible Markup Language) instances, style sheets prescribing the expression format of the XML instances, still pictures, animation, voice, subtitles (texts), and other monomedia data (hereinafter referred to as "AV/subtitles") as objects contained in broadcast program information.

These broadcast contents are transferred to the Sending Section 200 through, for example, a LAN (Local Area Network) laid in the Broadcast Server 1.

The Sending Section 200 packets the output data by each of the Contents Transfer System 201, Base Band Control System 202 and AV Encoder 203, Subtitle Insertion 204 and transfers the packeted data to the Transmission Section 300.

In the Transmission Section 300, XML instances are codified at the Multimedia Coding Section 301to be transferred to the Contents Transmission System 302. The Synthesis Section 304 synthesizes the output data form each of the Contents Transmission System 302 and AV Subtitles Transmission System 303. And the Modulation Section 305 modulates the synthesized signals to RF, and transmits the same to the Receivers/ Decoders 10 through a RF transmission line.

On the RF transmission line, RF signals are in the first place transmitted from the transmission antenna installed at the Broadcast Server 1 to the Broadcast Satellite 5, and then after passing through the Broadcast Satellite 5, the same are received by the receiving antenna of the Receiver/Decoder 10.

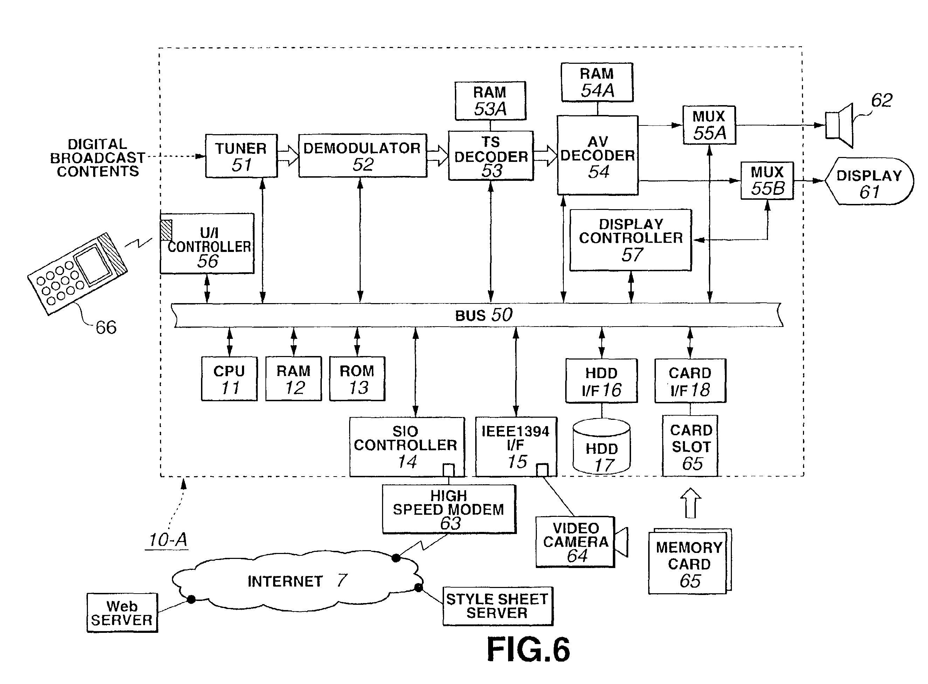

Fig. 6 shows the schematic hardware configuration of an example of digital satellite data broadcast receiving system 10-A installed at a receiver/decoder 10. The receiving system 10-A is widely diffused among the general households for example in the form called STB (Set Top Box).

In the receiving system 10-A, CPU11 as the main controller is interconnected with various hardware components through a bus 50 to exercise a general control over each of the components. The following are explanations on each of them.

Broadcast wave received by an antenna (not shown) is supplied to a tuner 51. The broadcast wave follows the specified format, but it may be cable broadcast wave or ground wave in addition to the broadcast wave for satellite broadcast stated above, and it is not limited particularly.

The tuner 51, following the instruction given by the CPU (Central Processing Unit) 11, tunes in to broadcast waves of specified channels, and outputs the received data to the subsequent decoder 52. The decoder 52 decodes the received data that are modulated into digital signals. In the meantime, depending on whether the broadcast waves transmitted are analogue or digital, the configuration of the tuner 51 may be changed or enlarged accordingly.

The demodulated digital data are "'a transport stream" obtained by multiplexing AV data compressed by the MPEG 2 compression method and data broadcast contents. The former AV data are visual and audio information constituting the broadcast program body. And the latter digital transmission data are accessory data to this broadcast program body, and includes for example an EPG (Electric Program Guide). Data broadcast contents will be described in details later. It should be noted in the meanwhile that the transport stream is classified in "the transport layer" as described in the OSI (Open Systems Interconnection) reference model.

The TS decoder 53 interprets this transport stream, divides it into AV data compressed by the MPEG 2 compression method and data broadcast contents, transfers the former to the AV decoder 54 and the latter to the CPU11 through the bus 50. TS decoder 53 may be provided with a memory 53A for storing work data in its local.

Upon receiving real-time AV compressed by the MPEG 2 method from the TS decoder 53, the AV decoder 54 divides the same into compressed picture data and compressed voice data. And the picture data are then processed for expansion by the MPEG2 method to reproduce the original picture signals, and the voice data are decoded by the PCM (Pulse Code Modulation) method and then synthesized with added sound to produce reproduced voice signals. The AV decoder 59 may be provided with a memory 54A for storing work data in its local. The reproduced picture signals are displayed and outputted on a display 61 through a multiplexer 55B, and the reproduced voice signals are outputted to a speaker 62 through a multiplexer 55A.

A user interface controller 56 is a module for processing the input operation of users, and has the function of allowing remote controls 66 by means of operating buttons/switches (not shown) for the direct manual operation by users and infrared rays (IR). And it may include a display panel or a LED indicator (not shown) to display the current settings.

One of the operating buttons of the user interface controller 56 or the operating buttons of the remote controller 66 is allocated to a button for operating the validation/ invalidation of the display output from the display controller 57 (described below) (display/output of program information based on the data broadcast contents).

CPU (Central Processing Unit) 11 is the main controller controlling the whole operation of the receiving system 10-A. And the CPU 11 can process the data broadcast contents transferred through the bus 50. In the present embodiment, data broadcast contents are instances described in the XML (eXtensible Markup Language) format (described later), and the CPU 11 can execute processing software (described later) such as XML parsing and XSL processing on XML instances (both of them are hereinafter referred to as "XML engines") on a platform provided by an operating system (OS).

RAM (Random Access Memory) 12 is used to load the execution program code or write work data for the execution program of the CPU 11. And ROM (Read Only Memory) 13 is a read only memory for permanently storing a self-diagnostic and/or initialization program executed when the receiving system 10 is switched on or a microcode for operating hardware.

Serial input/output (SIO) controller 14 is a peripheral controller for exchanging serial data with external devices of the receiving system 10-A. The serial port provided on the SIO controller 14 accepts an external connection with a high-speed modem 63 (with a transfer rate of, for example, 56 Kbps) for modulating/demodulating transfer data on the analogue telephone line. A PPP (Point-to-Point Protocol) connection to a specified access point (not shown) by this high-speed modem 63 results in the receiving system 10-A being connected to the Internet 7 as a wide area network.

The IEEE (Institute of Electrical and Electronics Engineers) 1394 interface 15 is a serial high-speed interface that enables to transmit and receive data at about several hundred Mbps. The IEEE 1394 port can accept the daisy chain connections or tree connections of external apparatuses according to the IEEE 1394 standard. As apparatuses according to the IEEE 1394 standard, for example video camera 64 or scanner (not shown) can be mentioned.

The hard disc drive (HDD) 17 is an external storage apparatus for storing programs and data in a prescribed file format, and normally has a relatively large capacity of several GB. The HDD 17 is connected with the bus 50 through a hard disc interface 18.

The card interface 18 is an apparatus for executing the bus protocol between a card-type device 65 loaded on a card slot 19 and the bus 50. An example of the card-type device 65 is a PC card of a credit card size and constructed as a cartridge. The PC card is governed by the "PC Card Standard" jointly formulated by PCMCIA (Personal Computer Memory Card Interface Association) and JEIDA (Japan Electronic Industry Development Association).

An example of the PC card is a memory card consisting of nonvolatile and erasable/rewritable memory chips such as EEPROM (Electrically Erasable and Programmable ROM). When the receiving system 10-A is constructed in a relatively small size and at a low price, it is sometimes difficult from the design viewpoint to integrate a large capacity and large volume HDD 17. In such a case, it is considered preferable to use a detachable and portable memory card vis-a-vis the receiving system 10-A. Detachable memory cards 65, however, need not to be limited to the form factor of PC card, but they may be so-called "memory sticks."

The display controller 57 is a controller dedicated to control the display output of broadcast program information based on the data broadcast contents.

In this digital broadcast data receiving system 10-A, the CPU 11 controls the tuning operation of the tuner 51 according to the user input command received through the user interface controller 56, and controls the display of program information. In other words, the CPU 11processes the digital broadcast data transferred from the TS decoder 53, converts them into display data and supply the same to the display controller 57. The display controller 57 generates picture signals of program information based on the display data and supplies them to the multiplexer 55B. And the CPU 11 processes voice data contained in the digital broadcast data and supplies the same to the multiplexer 55A through the bus 50. The multiplexers 55A and 55B multiplex each of the display data and voice data supplied from the CPU 11 with the picture data and voice data outputted from the AV decoder 54 as the main body of broadcast program and output externally to each of the display 61 and speaker 62. The processing of digital broadcast data will be described in detail later.

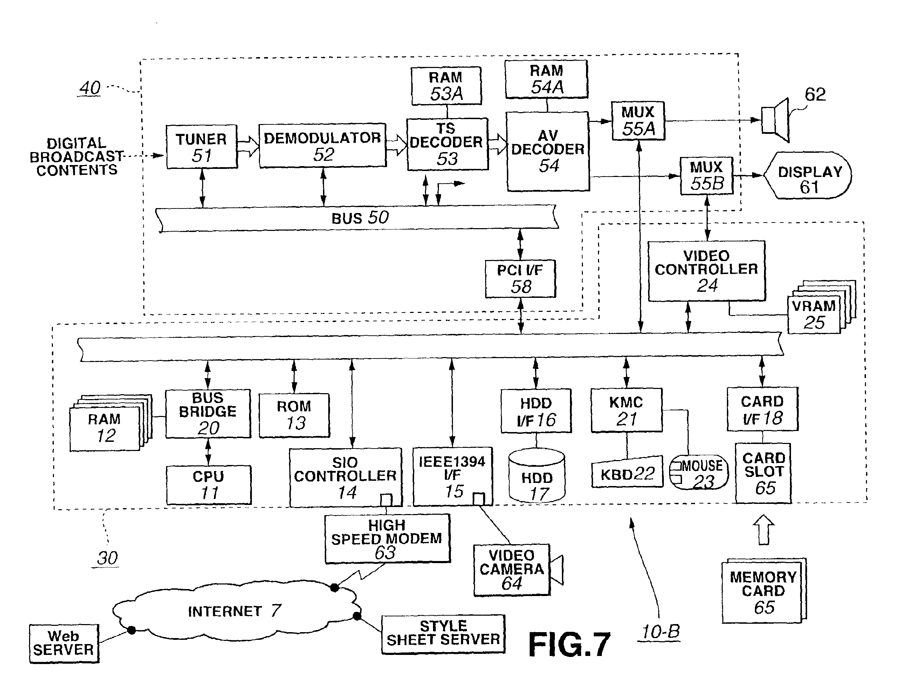

Fig. 7 shows the schematic hardware configuration of the digital broadcast data receiving system 10-B related to another embodiment. The receiving system 10-B related to this embodiment is executed by providing a general-purpose computer 30 with a digital tuner card 40 for satellite digital broadcast.

A digital tuner card 40 consists a tuner 51, a demodulator 52, a TS decoder 53, an AV decoder 54, RAM 53A and 54A, multiplexers 55A and 55B. Its configuration and functions are almost identical with the hardware block having the same reference number as the one shown in Fig. 6. This digital satellite broadcast tuner card 40 is connected with a system bus (PCI bus) 31 in the computer system 30 through a bus interface (PCI interface) 58 (illustrated).

The broadcast wave received by an antenna (not shown) is tuned in to by the tuner 51 and demodulated by the demodulator 52. The TS decoder 53 interprets transport streams and divides them into AV data compressed by the MPEG 2 method and data broadcast contents. The AV data are supplied to the AV decoder 54, processed in the same way as stated above, and outputted externally to the display 61 and the speaker 62. The data broadcast contents, on the other hand, are transferred to the computer system 30 through a PCI (Peripheral Component Interconnect) interface 58 to be processed by the CPU 11 in the system (described later).

The general-purpose computer system 30, on the other hand, includes a printed circuit board (not shown) loaded with CPU 11 and other main circuit components. The board is also called "mother board." The aforementioned tuner card 40 is provided for example in the form of "adaptor card" and is inserted into a bus slot (not shown) installed on the mother board.

The tuner card 40, however, is supplied not in the form of an adaptor card but in the form of a PC card in accordance with the standards established by the PCMCIA (Personal Computer Memory Card International Association)/JEIDA (Japan Electronic Industry Development Association) and is incorporated into the system configuration of the computer system 30 by being inserted into a PC card slot 19.

The CPU 11 is a main controller that generally controls the operation of the whole computer system 30. The CPU 11 related to this embodiment can execute various software programs (described later) for processing XML contents such as XML parsing or XSL processing (or XML engines) on a platform provided by an operating system (OS).

The processor bus directly connected with the external pins of the CPU 11 is interconnected with the system bus 31 through a bus bridge 20.

The bus bridge 20 of the present embodiment includes a data buffer for absorbing the difference in speed between the processor bus and the system bus 31 and a memory controller for controlling the memory access to the RAM 12.

The RAM (Random Access Memory) 12 is a writable volatile memory used to load the execution program code for the CPU 11 and to write work data for execution programs. It is normally constituted by a plurality of DRAM (Dynamic RAM) chips.

The system bus 31 is a common signal transmission line including an address bus, a data bus, a control bus, etc. and for example PCI (Peripheral Component Interconnect) bus corresponds to this. On the system bus 31, various peripheral devices meeting the PCI interface standard are interconnected. An example of such peripheral devices is the digital satellite broadcast tuner card 40. These peripheral devices on the bus 31 are respectively allocated their particular I/O addresses (or memory addresses), and the CPU 11 (more precisely a program executed by the CPU 11) can realize the transfer of data and commands to the peripheral devices desired by designating I/O addresses (or memory addresses).

The ROM (Read Only Memory) 13 is a read only memory for permanently storing a self-diagnostic program (POST: Power On Self Test) executed upon switching on the power for the computer system 30 and the basic input/output system (BIOS: Basic Input/Output System) for operating hardware. The ROM 13 may be constituted by for example electrically erasable and rewritable EEPROM (Electrically Erasable and Programmable ROM).

The Serial I/O (SIO) controller 14 is a peripheral controller for exchanging serially data with external apparatuses of the computer system 30. A serial port provided on the SIO controller 14 accepts an external connection with a high-speed modem 63 (with a transfer rate of for example 56 Kbps) for modulating/demodulating transfer data on the analogue telephone line. A PPP (Point-to-Point Protocol) connection with a specified access point (not shown) by means of a high-speed modem 63 results in the computer system 30 (or the receiving system 10-B) being connected with the Internet 7.

The IEEE 1394 interface 15 is a high-speed serial interface capable of transmitting and receiving data at a speed of several hundred Mbps. The IEEE 1394 port can accept daisy chain connections or tree connections with external devices adapted to the IEEE 1394 standard. Examples of apparatuses according to the IEEE 1394 standard are, for example, a video camera 64 or a scanner (not illustrated).

The hard disc drive (HDD) 17 is an external storage apparatus for storing programs or data in a specified file format, and has normally a large capacity of several GB. The HDD 17 is connected with the system bus 33 through the hard disc interface 16. The interface standards used to connect the hard disc drive with the computer system 30 are, for example IDE (Integrated Drive Electronics) or SCSI (Small Computer System Interface), etc.

The keyboard/mouse controller (KMC) 21 is a dedicated controller for processing user inputs from the keyboard 22 or the mouse 23. In response to the detection of a scan code input from the keyboard 22 or a coordinate designation input from the mouse 23, KMC21 issues an interrupt request to the CPU 11. In the present embodiment, ordinary command inputs to the computer system 30 and other input operations to the receiving system 10-B including channel selection can be performed through the keyboard 22 and the mouse 23.

One of the function keys of the keyboard 22, or one of the menu buttons disposed on the display 61 is allocated to a button for operating the validation or invalidation of display outputs from the video controller 24 (or display outputs of program information based on the digital transfer data).

The card interface 18 is a device for executing the bus protocol between the bus 50 and a card-type device 65 inserted into the card slot 19. An example of card-type device 65 is a PC card of a credit card size and constituted as a cartridge. The PC card is governed by the "PC Card Standard" jointly formulated by PCMCIA (Personal Computer Memory Card Interface Association) and JEIDA (Japan Electronic Industry Development Association).

An example of the PC card is a memory card consisting of nonvolatile and erasable/rewritable memory chips such as EEPROM (Electrically Erasable and Programmable ROM). When the digital broadcast receiving system 10-B is constructed in a relatively small size and at a low price, it is sometimes difficult from the design viewpoint to integrate a large capacity and large volume HDD 17. In such a case, it is considered preferable to use a detachable and portable memory card vis-a-vis the receiving system 10-B. Detachable memory cards 65, however, need not to be limited to the form factor of PC card, but they may be so-called "memory sticks."

The video controller 24 is a controller dedicated to control the screen display based on a plotting instruction given by the CPU 11, and is provided with a frame memory (VRAM) 25 for temporarily storing plotting information. Incidentally, in order to carry out well the present invention, it is preferable that the video controller 24 would have a plotting capacity of VGA (Video Graphics Array) or more (for example, SVGA (Super Video Graphics Array) or XGA (eXtended Graphics Array).

In this digital satellite broadcast receiving system 10-B, the CPU 11 controls the tuning operation of the tuner 51 and controls the display of program information in response to commands inputted by the user through the keyboard 22 or the mouse 23. In other words, the CPU 11 processes the digital broadcast data supplied from the TS decoder 53, converts the same into display data and supplies the same to the video controller 24. The video controller 24 generates image signals for program information based on the display data, and supplies the same to the multiplexer 55B. And the CPU 11 also processes the voice data contained in the digital broadcast data and supplies the same to the multiplexer 55A through the bus 50. The multiplexers 55A and 55B multiplex each of the display data and voice data supplied from the CPU 11 with the image data and voice data outputted from the AV decoder 54 as the main body of broadcast programs, and output them respectively to the display 61 and the speaker 62. In the meanwhile, the processing of the digital broadcast data will be described in details later.

Incidentally, the constitution of the satellite digital data receiving system 10 requires many electric circuits in addition to those shown in Fig. 6 and Fig. 7. These are, however, known to those skilled in the art, and they do not constitute the purpose of the present invention. Therefore, they are omitted in the present specification. And in order to avoid complications of drawings, the connections among various hardware blocks are illustrated only partially. This is a point to which attention must be paid.

For example, although not illustrated in Fig. 6 and Fig. 7, the receiving system 10 may be provided with a FDD (Floppy Disc Drive), a CD-ROM drive, a MO (Magneto-Optical disc) drive and other external storage apparatuses wherein a FD (Floppy Disc), CD-ROM, MO and other portable recording media may be loaded and accessed for writing and retrieving data.

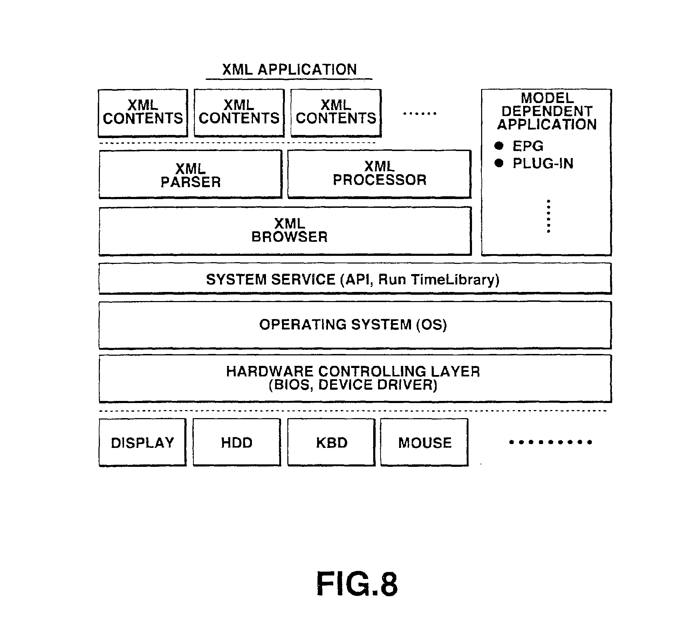

Fig. 8 shows schematically the hierarchical structure of various software programs executed by the digital broadcast data receiving system 10. The following are explanations on the functions of each layer of software.

The hardware control layer at the bottom layer is intended to absorb differences in hardware vis-a-vis the top software such as the operating system (OS) and executes processing in response to direct input/output operations on each hardware and hardware interrupts.

The hardware control layer is provided to the receiving system 10 in the form of BIOS (Basic Input/Output System) stored permanently for example in ROM 13, or "device drivers" installed in HDD 17.

The operating system (OS) is the basic software for generally managing hardware and software in the receiving system 10. The OS includes subsystems such as "the file manager" for managing the file records on the HDD 17, "the memory manager" for managing memory spaces, "the resource manager" for managing the allocation of system resources, "the scheduler" for managing the execution of tasks, "the window system" for controlling the window displays on the display, etc.

The system service is an assembly of functions to which applications and other higher programs have recourse to call various functions of the OS, and API (Application Programming Interface) and run-time library correspond to this. The presence of the system service eliminates the needs for applications to operate directly various hardware, and ensures the consistency of hardware operation.

The XML applications are programs for controlling the way data broadcast is displayed and outputted, and are XML instances described in a language provided with arbitrarily definable tag called XML. Each XML instance may be accompanied by a DTD document for defining document format, a XSL document as a style sheet for prescribing the display format (or CSS, or XSLT, a standard derived from XSL) or other style sheets.

The XML parser is a software program for parsing DTD documents and XML documents, and delivers document objects or result of parsing to the XSL processor. This document object is a structurized document for which a tree structure is formed in accordance with the tags in the original XML document.

The XSL processor is a software program for converting document objects into an expression format according to the description of the XSL document. More specifically, document objects are retrieved from a tree and various elements of the tree are converted into execution objects. (For example, they are converted into API (Application Programming Interface) against the XML browser. Or if such an element is a JAVA script, objects that can be thrown into a Java VM engine are generated.)

And now, the method of receiving XML instances and other data broadcast contents in the digital satellite data broadcast receiving system 10 will be explained.

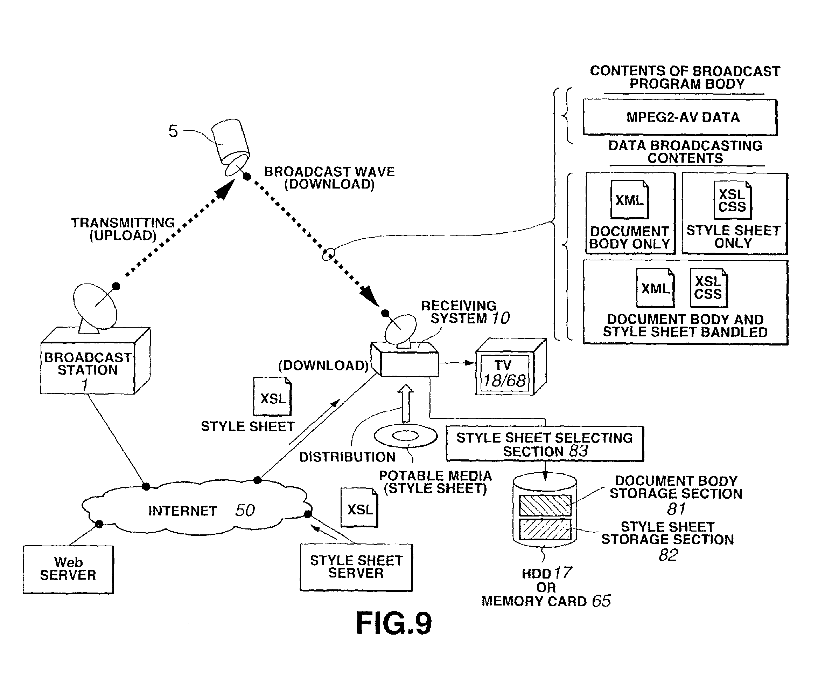

In the digital satellite broadcast system, as shown in Fig. 9, to begin with broadcast waves are uploaded from the broadcast server 1 to the broadcast satellite 5 and then they are downloaded from the satellite 5 to the receiver/decoder 10.

As explained already with reference to Fig. 3, broadcast contents are constituted as "a transport stream" made by multiplexing AV data compressed by the prescribed compression method such as MPEG (Motion Picture Experts Group) 2 and data broadcast contents. (A transport stream is broken down into transport layers of the OSI (Open Systems Interconnection) reference model.)

And as explained with reference to Fig. 6 and Fig. 7, TS decoder 53 interprets this transport stream and divide it into the AV data portion and the data broadcast contents portion. The AV data portion is processed by the AV decoder 54, and the data broadcast contents portion is processed by the CPU 11.

The data broadcast portion is constituted by a plurality of modules. Each module contains EPG, advertisement information and other various information accessory to the main body of broadcast programs. And the data broadcast contents portion is transformed into a data carousel, and each data module appears repeatedly during the broadcast of the broadcast body. (As a result, the receiving system 10 as a viewer can obtain desired data modules at an optional timing during the broadcast period of the program and omit memories for cache.)

On the receiving system 10 side, the necessary ones among these data broadcast contents received are stored temporarily at a local storage device of the receiving system 10 such as HDD 17 (or memory card 65).

In a one-way transmission environment such as satellite broadcast, contents written in the standard XML language are transmitted in a format in which XML instances and style sheets are packed together unless the style sheets used are limited.

In the present embodiment, the data broadcast contents portion among the broadcast contents assumes the transmission of only XML instances and that of only style sheet in addition to the joint packing of a multimedia coding application consisting of XML instances and a style sheet prescribing the expression format of XML (XSL document, etc.). And the style sheet may be downloaded in the form of a file supplied through the Internet or other networks or may be supplied in the form of a portable recording medium such as FD, CD-ROM or MO.

The receiving system 10 related to the present embodiment is stored separately from the XML instances and style sheet supplied. In other words, an external storage apparatus 17/65 for storing these document files provided consists of a document body storage section 81 for storing and managing XML instances (may include DTD document, however), and a style sheet storage section 82 for storing and managing only XSL documents as style sheets. Style sheets are getting more sophisticated in their functions and added values, and style sheets or XSL documents themselves have acquired a character of valuable written works in the same way as documents proper. Therefore, in order to eliminate the unauthorized use or illicit use of style sheets, it is preferable that the style sheets storage section 82 be a storage area managed for security.

And in the present embodiment, the receiving system 10 is designed in such a way that style sheets supplied from outside are at first selected in the style sheets selection section 83 and then the selected style sheets are stored in the style sheets storage section 82. The style sheets selection section 83 selects style sheets based mainly on the output attributes of the display apparatus 18/68, and the contents attributes of the data broadcast contents received or XML instances. This point will be explained in more details below.

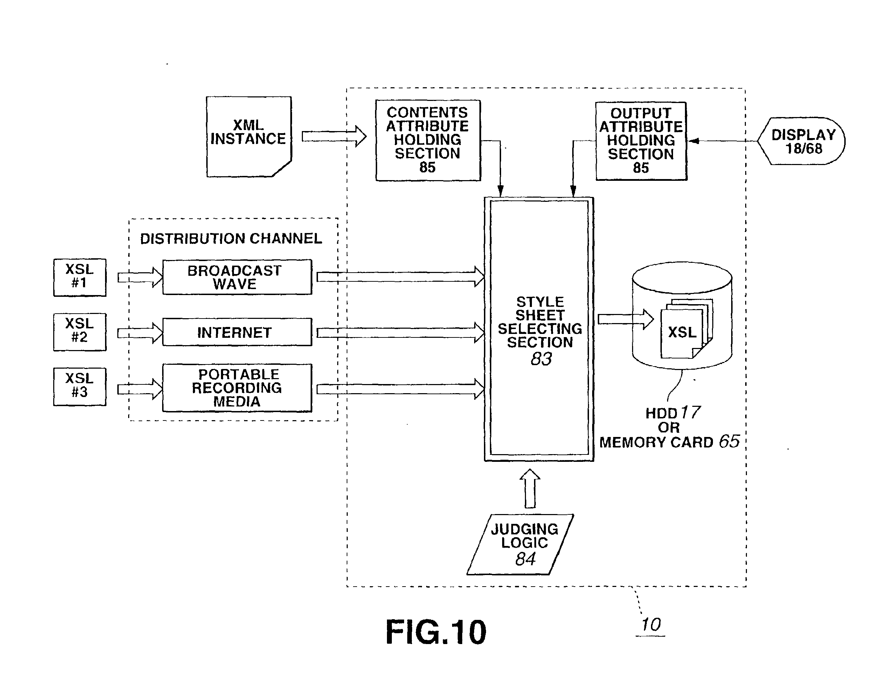

The following is a description of the method of selectively storing style sheets supplied in the receiving system 10 by referring to Fig. 10.

As shown in Fig. 10, a number of distribution routes can be mentioned for supplying style sheets to the receiving system 10. For example, a part of the data broadcast waves is used in the form of data carousel (see Fig. 3) to transmit style sheets from the broadcast server 1 that supplies the main body of the data broadcast contents, and the style sheets are received through an antenna and the tuner 51.

And style sheets are supplied as one of information distribution services operated on the Internet. In other words, there is "a style sheets server" (see Fig. 2) that supplies style sheets on the Internet 7, and the receiving system 10 can obtain them by means of a file transfer (FTP: File Transfer Protocol). The style sheet server in this case may be operated by the broadcast server 1 that transmits the main body of the data broadcast contents or by a "style sheet dealer" (provisional name) specializing in the manufacture and distribution of style sheets. And style sheets may be distributed by style sheet servers for a consideration or free of charge.

And style sheets may be stored in portable recording media such as CD-ROM, MO, DVD, memory sticks, etc. and may be carried or transported among computer systems. For example, CD-ROMs containing style sheets may be marketed, rented or distributed among general users as a supplement to magazines.

The style sheets selection section 83 selects only necessary style sheets in the receiving system 10 from among one or more style sheets supplied as mentioned above and stores them in a local external storage device such as HDD 17 (or memory card 65). More specifically, output attributes stored in the output attribute storage section 85 or contents attributes stored in the contents attributes storage section 86 are inputted into the determination logic 84, and only style sheets meeting the determination logic are extracted and stored.

The "output attributes" referred to here refer to the resolution and other display capacities of the display 18/68 and other display apparatuses outputting data broadcast contents consisting of XML instances, the name of manufacturer and model name of the display apparatuses. The means of obtaining output attributes by the output attributes storage section 85 itself is not questioned in particular. For example, they may be obtained automatically from the display 18/68 connected by cable to the receiving system 10 in accordance with the prescribed communication procedure at the time of boot. Or users may manually input them through the user interface of the receiving system 10.

The selection of style sheets by taking into account output attributes results from the differences in the optimum format of display depending on the capacity of display apparatuses. (For example, the optimum display format for a high-resolution and high-definition HDTV is not always adequate for a small-screen and low-resolution PDA.)

And the term "contents attribute" refers to the contents and characteristic of XML instances. Contents attributes can be identified, for example, by parsing tags in the XML instances (see Table 1 below). Instead of parsing the contents attributes on the receiving system 10 side, however, the data broadcast contents may be distributed by including contents identifiers corresponding to the parsing results in the contents in advance.

Table 1.

| | | |
|---|---|---|
| <POSITION> | <NUMBER> | <MPEG4> |
| <COLOR> | <PATTERN> | <VIDEO> |
| <SIZE> | <BOX> | <AUDIO> |
| <FONT> | <POINT> | <AVI> |
| <TEXT> | <CIRCLE> | <CGI> |
| <GRAPH> | <TRIANGLE> | <MOVIE> |
| <PICTURE> | <ARC> | <VECTOR> |
| <PALLET> | <DOT> | <HEADER> |
| <MENU> | <DIGIT> | <CHARACTER> |
| <FIGURE> | <CODE> | <WORD> |

Table 1.   (continued)

| <WINDOW> | <FILE> | <STRUCT> |
|---|---|---|
| <HELP> | <BITMAP> | <MEMO> |
| <CLIP ART> | <MPEG> | <EVENT> |
| <SLIDE> | <MPEG1> | <LOGO> |
| <MODE> | <MPEG2> | <TASK> |
| <COPY> | <WIPE> | <FAST> |
| <CONTROL> | <EXPAND> | <SLOW> |
| <STATUS> | <TASK> | <CAPTURE> |
| <COMMAND> | <JOB> | <PLAY> |
| <FUNCTION> | <SPIN> | <REC> |
| <DATA> | <ELEVATE> | <VIEW> |
| <TIME> | <COLLECT> | <LINK> |
| <DATE> | <EXECUTE> | <JUMP> |
| <OBJECT> | <HOLD> | <MARK> |
| <GUIDE> | <AUTO> | <ID> |
| <SPELL> | <SYNC> | <EJECT> |
| <LANGUAGE> | <ASYNC> | <STOP> |
| <CAPTION> | <START> | <SLEEP> |
| <FOCUS> | <FORWARD> | <CONTINUE> |
| <ZOOM> | <REVERSE> | <GO> |

Style sheets are selected by taking into account the contents attributes because the optimum format of display differs depending on the elements included in the contents and the type of monomedium. (For example, the optimum format of display differs depending on whether the type and size of fonts specified in the display text, bitmaps or drawings are included or not.)

The determination logic 84 provides indices for selecting style sheets depending on the output attributes and/ or contents attributes as mentioned above. The determination logic 84 may be, for example, in the form of a lookup table, or in the form of rules composed by if sentences.

Table 2 below shows examples of termination logics 84 related to output attributes constituted in the lookup table form. In this case, resolution can be indicated from the display type obtained from the output apparatus 18/68 or output attributes, and the optimum style sheets can be selected on that basis.

Table 2

| <DISPLAY TYPE> | <X size> | <Y size> |
|---|---|---|
| <HDTV> | 1920 | 1080 |
| <SDTV> | 704 | 480 |
| <VIDEO-CD> | 352 | 240 |
| <SXGA> | 1280 | 1024 |
| <XGA> | 1024 | 768 |
| <SGA> | 800 | 600 |
| <VGA> | 640 | 480 |
| <CGA> | 160 | 120 |
| <JPEG> | 704 | 480 |

And Table 3 below shows examples of determination logic 84 related to the contents attributes constituted in the lookup table format. In this case, the optimum style sheet or XSL documents file name can be retrieved according to the content identifiers described in the data broadcast contents.

Table 3.

| Contents-ID | | XSL FILE |
|---|---|---|
| | | |
| 0 | | BS-type 1 |
| 1 | | BS-type 1 |
| 2 | | BS-type 1 |
| 3 | | BS-type 2 |
| 4 | | BS-type 2 |
| 5 | | BS-type 3 |
| 6 | | BS-type 4 |
| 7 | | BS-type 5 |
| | | |

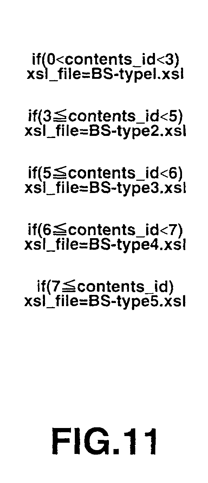

And Fig. 11 shows examples of the determination logic 84 related to the contents attributes described in the rule formats consisting of if sentences. In this case, it is possible to identify the optimum style sheet by throwing contents identifiers provisionally stored in the contents attribute storage section 86 into the determination logic 84. According to the figure, "BS-type 1.xsl" is automatically selected for data broadcast contents with less than three contents identifiers (contents_id), "BS-type 2.xsl" is automatically selected for data broadcast contents with three to less than five identifiers, "BS-type 3.xsl" is automatically selected for data broadcast contents with five to less than six identifiers, "BS-type 4.xsl" is automatically selected for data broadcast contents with six to less than seven identifiers, and "BS-type 5.xsl" is automatically selected for data broadcast contents with seven or more identifiers.

In the meanwhile, when style sheets selected on the basis of output attributes and/or contents attributes are not found in the local of the receiving system 10 (when they have not been received as data carousel or have not been supplied in the form of portable recording medium), the receiving system 10 may be constituted in such a way that applications for retrieving information spaces on the Internet 7 such as WWW Browser are started so that files may be automatically downloaded from the style sheet server.

In carrying out the present invention, the way the style sheet server supplies style sheets to the receiving systems 10 is not specially limited. For example, the receiving systems 10 may specify the file name of style sheets and download files from the style sheet using ordinary FTP (File Transfer Protocol).

Or, the receiving systems 10 may send to the style sheet server requests for the supply of style sheets accompanied with output attributes and/or contents attributes. In this case, the style sheet server processes the request, retrieves its own local disc (or a remote disc on the Internet 7), finds out style sheets matching with the request, and returns the same to the receiving system 10 having made the request. Ordinary Web servers, that do not contain the function of retrieving databases, may constitute a style sheet server by the Web server starting an external program (CGI application) using CGI (Common Gateway Interface).

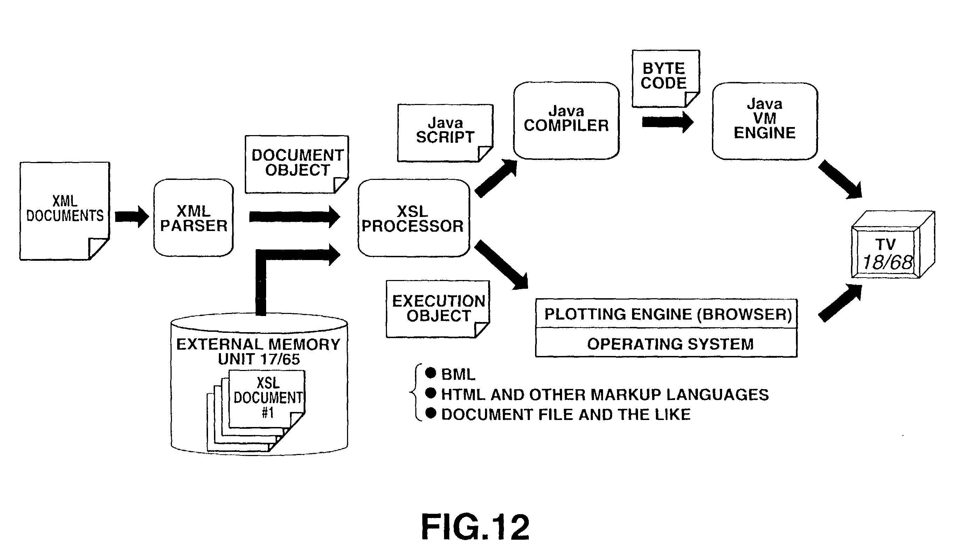

The following is a description of the method of processing the data broadcast contents received in the receiving system 10 with reference to Fig. 12. As mentioned below, the application of a style sheet matching with the output attributes of the output apparatus 18/68 and /or the contents attributes of data broadcast contents converts XML documents as the broadcast content body into a desired executable format and leads to the realization of the optimum format of display.

The receiving system 10 obtains style sheets as a part of data broadcast contents or through other distribution channels. The main body of data broadcast contents is not necessarily limited to documents written in the XML language format, or XML instances. They may be, for example, written in a language format other than XML, for example SGML (Standard Generalized Markup Language), HTML (Hyper Text Markup Language), etc. And the main body of data broadcast contents may include XML instances and other DTD documents. And a style sheet is a document file prescribing the expression format of the main body of an XML instance written for example in the XSL format..

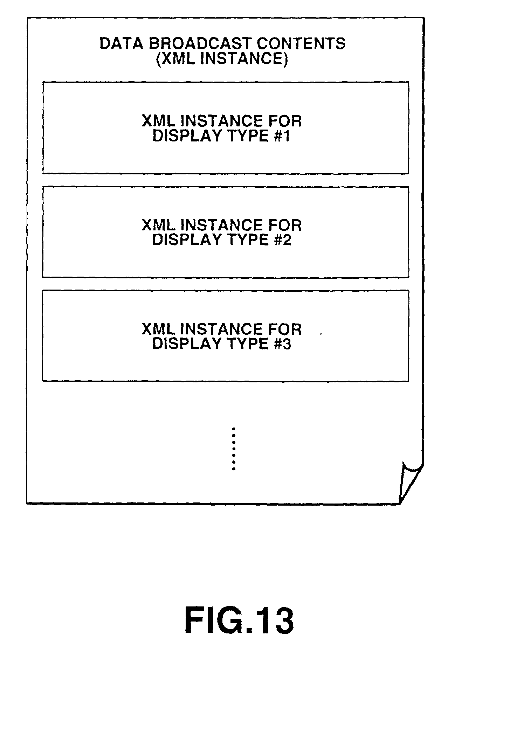

Fig. 13 illustrates schematically the document construction of a XML instance handled in the present embodiment. As shown in the figure, a single XML instance is constituted by a serial linkage of instances of identical service contents to be offered but with different display types or output attributes. In the case of contents written in the XML language, the optional definition of tags enables to connect serially different broadcast contents by dividing them by tags. As a result, it is possible to distribute information supply service for all the output attributes by a single SML instance, or a single data module, and therefore to use effectively the transmission line band.

As shown in Fig. 13, when a single data broadcast content include a plurality of XML instances, an appropriate XML instance is taken out based on the output attributes held in the output attribute holding section 85.

The XML instance taken out is inputted into a parsing program called "XML parser" to be parsed. The XML parser outputs the processing result as a document object, and delivers the same to the subsequent XSL processor module. Incidentally, the document object referred here should be understood as a structurized document for which a tree structure was formed according to the tag in the former XML instance.

An XSL document is a style sheet (mentioned earlier) prescribing the expression format of XML instances (for example, display format to the output apparatus 18/68, and print output format to the printer (not shown)). In the present embodiment, an external storage apparatus 17/65 installed in the receiving system 10 accumulates in advance one or more XSL document file or files. Various style sheets thus accumulated, however, had been selected at the style sheet selection section 83 (as mentioned earlier).

The XSL processor takes out XSL documents from the external storage apparatus 17/65, and converts the document objects in accordance with the description of the XSL documents into executable objects corresponding to the prescribed style. An executable object is, for example, API (Application Programming Interface: LIB or command) to the browser to make the main body of data broadcast contents available for inspection.

Or, if the original code is a Java script, it is thrown into the Java compiler (not shown) to be converted into an intermediate code called "byte code."

And the executable document thus created is thrown into an execution engine. An example of execution engine is browser for plotting on the display 18 (or 68). The browser may be an XML browser enabling to browse XML documents or a HTML browser for the HTML documents. Browser and other execution engines generally operate on a platform provided by the operating system. In other words, calling an API (Application Programming Interface) provided by the operating system enables to process efficiently.

And an execution object called "byte code" created by the Java compiler is thrown into a Java VM (Virtual Machine) engine. The VM engine enables to perform automatically on an application or on an OS a series of processing that combines operating procedures (for example specific keys and buttons) that end users can control.

As a variation to the present invention, a method of using only a single style sheet to address to a plurality of contents attributes and output attributes instead of preparing a style sheet for each contents attribute or output attribute may be considered. Such a system can be achieved by using for example Java script.

For example, while style sheets stored in the receiving system 10 are designed for specific contents attributes and/or specific output attributes, processing required for data broadcast contents or output apparatuses with other attributes may be described in Java script.

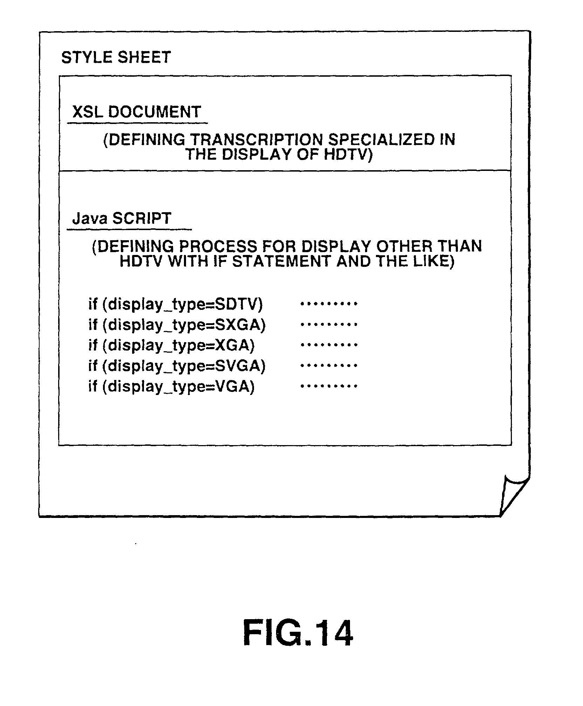

Fig. 14 shows schematically examples of processing matching with output attributes and/or contents attributes and described in Java script. As shown in the figure, a single XSL document file includes a portion of Java script written in Java language in addition to the code portion written in the XSL format.

The body of a style sheet written in XSL format prescribes a display format for HDTV (High Definition Television) as display type. The Java script portion, on the other hand, describes processing for display types other than HDTV, for example SDTV, SVGA, XGA, VGA, etc... by the if rule sentence format. Therefore, by processing adequately if rule sentences based on the output attributes stored in the output attributes storage section 85, it is possible to perform an operation for display output matching with the output apparatus 18/68.

And the following formula (1) shows schematically another example of processing matching with the output attributes and/or contents attributes and described in Java script.

Formula

```
<SCRIPT LANGUAGE="JavaScrip"><xsl :comment><![CDATA[

var font_size;

font_size=documentElement.childNodes.item(0);

if(font_size=1) htmlString ="<H1><FONT SIZE=8>"

if(font_size=2) htmlString ="<H1><FONT SIZE=12>"

if(font_size=3) htmlString ="<H1><FONT SIZE=14>"
```

]]</xsl:comment></SCRIPT> (1)

Among the scripts shown in the formula (1) above, the tag <SCRIPT LANGUAGE> shows the actual script portion. This script is constituted by a conditional sentence of the if format. More specifically, the display font size of data displayed in the tag <H1> is to be set actively by the receiving system 10 and not by the contents distributing side (or the broadcast server 1 side) according to the value substituted for a variable font_size.

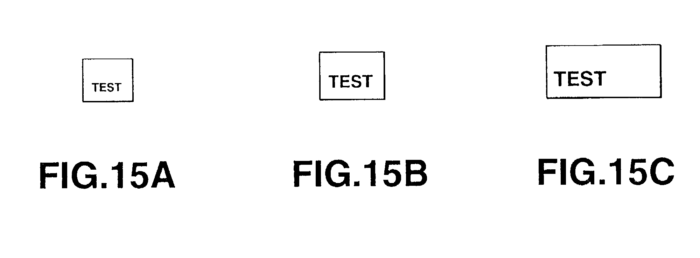

In other words, if font_size = 1, the font size of data displayed will be 8 (see Fig. 15A), if font_size = 2, the font size of data displayed will be 12 (see Fig. 15B), and if font_size = 3, the font size of data displayed will be 14 (see Fig. 15C).

Incidentally, detailed information on the Java script itself can be found on manuals available on the market (for example, "Introduction to Java Script for Decorating Homepages, revised version" by Asao Nishikawa, Gijutsu Hyoron-sha).

So far, the present invention has been explained with reference to specific embodiments. It is evident, however, that those skilled in the art may modify or substitute these embodiments to the extent that they do not deviate from the purpose of the present invention. In other words, the present invention is disclosed only as examples and should not be interpreted restrictively. In order to judge the purpose of the present invention, the column of "Claims" shown later should be referred.

Industrial applicability

As described in details above, according to the present invention, it is possible to provide an outstanding data distribution technology capable of providing documents in a language format in which arbitrarily definable tags are used (for example, XML (eXtensible Markup Language)) in a format matching with to output attributes and/or contents attributes.

And according to the present invention, it is possible provide an outstanding data distribution technology capable of providing single content information in a format matching with output attributes and/or contents attributes on the occasion of distributing data through broadcast or a network.

When the present invention is applied to a satellite or ground wave broadcast business, it is possible to provide information matching with output attributes or contents attributes based on a single content.

**Claims**

1. A data distributing method for distributing contents consisting of data written in a computer language, the method comprising the steps of:

   containing a plurality of offered information adapted to the output attribute in a single data content for distribution; and
   distributing the data content for distribution.

2. The data distributing method according to claim 1 wherein said data written in a computer language are data in a language format using tags.

3. The data distributing method according to claim 1 wherein said data written in a computer language are data in a language format using arbitrarily definable tags.

4. The data distributing method according to claim 2 wherein each of the information provided in accordance with the output attributes is data divided by tags.

5. The data distributing method according to claim 1 wherein the expression format of data contents for distribution can be prescribed by style sheets.

6. The data distributing method according to claim 5 wherein the style sheets prescribe the expression format in accordance with the output attributes.

7. The data distributing method according to claim 5 wherein the style sheets include scripts prescribing the expression format in accordance with the output attributes.

8. The data distributing method according to claim 1 wherein output attributes include at least one of the resolution, manufacturer's name, model name of a display apparatus that displays and outputs data contents for distribution.

9. A data distributing method for distributing contents consisting of data written in a computer language, the method comprising the steps of:

   containing contents identification information describing attributes of data contents to be distributed in a data content for distribution; and
   distributing the data content for distribution.

10. The data distributing method according to claim 9 wherein said data written in a computer language are data in a language format using tags.

11. The data distributing method according to claim 9 wherein said data written in a computer language are data in a language format using arbitrary definable tags.

12. The data distributing method according to claim 10 wherein each of information provided according to contents attributes are data divided by tags.

13. The data distributing method according to claim 9 wherein the expression format of data contents for distribution may be prescribed by style sheets.

14. The data distributing method according to claim 13 wherein the style sheets prescribe the expression format of the data contents for distribution in accordance with the contents identification information.

15. The data distribution method according to claim 13 wherein the style sheets contain scripts prescribing the expression format in accordance with the contents attributes.

16. A data distributing apparatus for distributing contents constituted by data written in a computer language, the apparatus comprising:

   means for including a plurality of information provided in accordance with output attributes in a single data content for distribution; and
   means for distributing the data content for distribution.

17. The data distributing apparatus according to claim 16 wherein the data written in a computer language are data in a language format using tags.

18. The data distributing apparatus according to claim 16 wherein said data written in a computer language are data in a language format using arbitrarily definable tags.

19. The data distributing apparatus according to claim 17 wherein each information provided according to output attributes are data divided by tags.

20. The data distributing apparatus according to claim 16 wherein the expression format of data contents for distribution may be prescribed by style sheets.

21. The data distributing apparatus according to claim 20 wherein the style sheets prescribe the expression formats matching with the output attributes.

22. The data distributing apparatus according to claim 20 wherein the style sheets contain scripts prescribing the expression formats matching with the output attributes.

23. The data distributing apparatus according to claim 16 wherein the output attributes include at least one of the resolution, manufacturer's name and model name of a display apparatus that displays and outputs the data contents for display.

24. A data receiving apparatus for receiving contents consisting of data written in a computer language, the apparatus comprising:

means for including contents identification information describing attributes of data contents to be distributed in a data content for distribution; and
means for distributing the data contents for distribution.

**25.** The data receiving apparatus according to claim 24 wherein said data written in a computer language are data in a language format using tags.

**26.** The data receiving apparatus according to claim 24 wherein said data written in a computer language are data in a language format using arbitrarily definable tags.

**27.** The data receiving apparatus according to claim 24 wherein each information to be provided according to contents attributes are data divided by tags.

**28.** The data receiving apparatus according to claim 24 wherein the expression formats of data contents for distribution may be prescribed by style sheets.

**29.** The data receiving apparatus according to claim 28 wherein style sheets prescribe the expression formats of the data contents for distribution in accordance with contents identification information.

**30.** The data receiving apparatus according to claim 28 wherein the style sheets contain scripts prescribing the expression formats in accordance with the contents attributes.

**31.** A data receiving method for receiving contents consisting of data written in a computer language and outputting the same in an output apparatus, the method comprising the steps of:

storing output attribute information related to the output apparatus;
selecting a style sheet matching with to the stored output attribute information; and
processing received data contents using the selected style sheet.

**32.** The data receiving method according to claim 31 wherein said data written in a computer language are data in a language format using tags.

**33.** The data receiving method according to claim 31 wherein said data written in a computer language are data in a language format using arbitrarily definable tags.

**34.** The data receiving method according to claim 31 wherein the style sheets contain scripts prescribing expression formats in accordance with output attributes.

**35.** The data receiving method according to claim 31 wherein the output attributes include at least one of the resolution, manufacturer's name and model name of a display apparatus displaying and outputting the received data contents.

**36.** The data receiving method according to claim 31 comprising the step of retrieving a matching style sheet on the Internet, when a style sheet matching the output attribute information stored in said step of selecting the style sheet can not be selected.

**37.** The data receiving method according to claim 31 comprising the step of obtaining a matching style sheet via a portable recording medium, when a style sheet matching the output attribute information stored in said step of selecting a style sheet can not be selected.

**38.** The data receiving method according to claim 31 wherein, in said step of selecting a style sheet, a style sheet matching the output attributes is selected from the style sheets supplied through the portable recording medium.

**39.** A data receiving method for receiving contents consisting of data written in a computer language, the method comprising the steps of:

storing output attribute information related to the output apparatus;

retrieving a style sheet matching the stored output attribute information from the style sheet server offering style sheets on the network; and

processing received data contents using the style sheet obtained by the retrieval.

**40.** A style sheet providing method for providing style sheets through networks, the method comprising the steps of:

storing one or more style sheets prescribing the expression format for each output attribute of each output apparatus;

receiving the requests for the provision of style sheets in a format including information on output attributes; and

extracting and transmitting a style sheet matching the output attribute specified by the request for provision.

**41.** A data receiving method for receiving contents consisting of data written in a computer language, the method comprising the steps of:

extracting contents identification information describing attributes from data contents received;

selecting a style sheet matching the contents identification information; and

processing received data contents using the selected style sheet.

**42.** The data receiving method according to claim 41 wherein said data written in a computer language are data in a language format using tags.

**43.** The data receiving method according to claim 41 wherein said data written in a computer language are data in a language format using arbitrarily definable tags.

**44.** The data receiving method according to claim 41 wherein style sheets contain scripts prescribing expression formats matching the contents identification information.

**45.** The data receiving method according to claim 41 comprising the step of retrieving a matching style sheet stored contents identification information on the network when a style sheet can not be found in said step of selecting a style sheet.

**46.** The data receiving method according to claim 41 comprising the step of obtaining through a portable recording medium a matching style sheet stored contents identification information on the network when a style sheet can not be found in said step of selecting a style sheet.

**47.** The data receiving method according to claim 41 wherein a style sheet matching contents attributes is selected from the style sheets provided through a portable recording medium in said step of selecting a style sheet.

**48.** A data receiving method for receiving contents composed of data written in a computer language and outputting the same an output apparatus, the method comprising the steps of:

storing contents attributes information related to the contents received;

retrieving a style sheet matching the stored contents attributes information from the style sheet server providing style sheets on the network; and

processing the data contents received using the style sheet obtained by the retrieval.

**49.** A style sheet providing method for providing style sheets through a network, the method comprising the steps of:

the step of storing one or more style sheets prescribing the expression format for each contents attribute;

the step of receiving requests for the provision of style sheets in a format including information on contents attributes; and

the step of extracting and transmitting a style sheet matching the contents attribute specified by the request for provision.

**50.** A data receiving apparatus for receiving contents composed of data written in a computer language and outputting the same in an output apparatus, the apparatus comprising:

means for storing output attribute information related to said output apparatus;

means for selecting a style sheet matching the stored output attribute information; and
means for processing received data contents by using the selected style sheet.

**51.** The data receiving apparatus according to claim 50 wherein said data written in a computer language are data in a language format using tags.

**52.** The data receiving apparatus according to claim 50 wherein said data written in a computer language are data in a language format using arbitrarily definable tags.

**53.** The data receiving apparatus according to claim 50 wherein the style sheets contain scripts prescribing expression formats in accordance with output attributes.

**54.** The data receiving apparatus according to claim 50 wherein the output attributes include at least one of the resolution, manufacturer's name and model name of a display apparatus displaying and outputting the data contents received.

**55.** The data receiving method according to claim 50 comprising means for retrieving a style sheet matching the stored contents identification information on the network when a matching style sheet can not be found in said step of selecting a style sheet.

**56.** The data receiving apparatus according to claim 50 comprising the step of obtaining through a portable recording medium a style sheet matching the stored contents identification information when a matching style sheet can not be found in said step of selecting a style sheet.

**57.** The data receiving apparatus according to claim 50 wherein a style sheet matching the output attributes is selected from the style sheets provided through a portable recording medium in said step of selecting style sheet.

**58.** A data receiving apparatus for receiving contents consisting of data written in a computer language and outputting the same to an output apparatus, the apparatus comprising:

means for storing output attribute information related to said output apparatus;
means for retrieving style sheets matching the stored output attribute information from the style sheet server providing style sheets on the network; and
means for processing received data contents using the style sheet obtained by retrieval.

**59.** A style sheet providing server providing style sheets through the network, the server comprising:

means for storing one or more style sheets prescribing the expression format for each output attribute of each output apparatus;
means for receiving the requests for the provision of style sheets in a format including information on the output attributes; and
means for extracting a style sheet matching the output attribute specified by the supply request.

**60.** A data receiving apparatus for receiving contents composed of data written in a computer language, the apparatus comprising:

means for taking out contents identification information representing the attributes from the received coutents;
means for selecting a style sheet matching contents identification information; and
means for processing received data contents using the selected style sheet.

**61.** The data receiving apparatus according to claim 60 wherein said data written in a computer language are data in a language format using tags.

**62.** The data receiving apparatus according to claim 60 wherein said data written in a computer language are data in a language format using arbitrarily definable tags.

**63.** The data receiving apparatus according to claim 60 wherein the style sheets contain scripts prescribing expression formats matching the contents identification information.

**64.** The data receiving apparatus according to claim 60 comprising means for retrieving a style sheet matching the stored contents identification information on the network when a matching style sheet can not be found in said step of selecting a style sheet.

**65.** The data receiving apparatus according to claim 60 comprising means for obtaining through a portable recording medium a style sheet matching the stored contents identification information when a matching style sheet can not be found in said step of selecting a style sheet.

**66.** The data receiving apparatus according to claim 60 wherein said step of selecting a style sheet selects a style sheet matching the contents attributes from style sheets supplied through the portable recording medium.

**67.** A data receiving apparatus for receiving contents composed of data written in a computer language and outputting the same to an output apparatus, the apparatus comprising:

a means for storing contents attributes related to the contents received;
means for retrieving style sheets matching the stored contents attributes information from the style sheet server providing style sheets on the network; and
means for processing the data contents received using the style sheet obtained by the retrieval.

**68.** A style sheet providing server for providing style sheets through a network, the server comprising:

means for storing one or more style sheets prescribing the expression format for each contents attribute;
means for receiving requests for the provision of style sheets in a format including information on contents attributes; and
means for extracting a style sheet matching the contents attribute specified by the supply request.

**69.** A data contents processing system for distributing, receiving and processing contents composed of data written in a computer language and outputting the same to an output apparatus, the system comprising:

means for distributing a plurality of information provided according to the contents attributes and/or output attributes contained in a single data contents for distribution;
means for storing output attributes information concerning said output apparatus and/or contents attributes concerning the data contents received;
means for selecting style sheets matching the output attributes information and/or contents attributes stored; and
means for processing the data contents received using the style sheet selected.

**70.** A data contents processing system for distributing, receiving and processing contents composed of data written in a computer language and outputting the same to an output apparatus, the system comprising:

means for distributing a plurality of information provided in accordance with the contents attributes and/or output attributes contained in a single data content for distribution;
means for storing the output attributes information concerning said output apparatus and/or the contents attributes concerning the data contents received, requesting style sheets matching the output attribute information and/or contents attributes stored, and processing the data contents received using the style sheets provided;
means for storing one or more style sheets prescribing the expression format for each output attribute and/or each contents attribute that each output apparatus has, and providing style sheets of formats containing information on the output attribute and/or contents attribute in response to requests for the same.

**71.** A program recording medium for recording in a tangible and computer-readable format a computer program for executing on a computer system a data distribution process for distributing contents composed of data written in a computer language, said computer program comprising the steps of:

including a plural number of the provided information matching output attributes and/or contents attributes in a single data content for distribution; and
distributing the data content for distribution.

**72.** A program recording medium for recording in a tangible and computer-readable format a computer program for executing on a computer system a data distribution process for distributing contents composed of data written in a computer language to an output apparatus, said computer program comprising the steps of:

storing output attribute information relating to the output apparatus and/or contents attributes relating to contents received;
selecting a style sheet matching the stored output attribute information and/or contents attributes; and
processing the received data contents using the selected style sheet.

**73.** A program recording medium providing in a tangible and computer-readable format a computer program for executing on a computer system the process of providing style sheets supplied through a network, said computer program comprising the steps of:

storing one or more style sheets prescribing the expression format of the output attributes of each output apparatus and each content attribute of contents for distribution;
receiving requests for the provision of style sheets in a format including information on the output attributes and/or contents attributes; and
extracting and transmitting style sheets matching the output attributes and/or contents attributes specified by the requests for provision.

DISPLAY/OUTPUT CONTROL PROGRAM
(MULTIMEDIA CODING APPLICATION)
BML, XML, MHEG, HTML ...

MONO MEDIA DATA
(STILL-PICTURE:JPEG, GIF, BMP ...)

DATA
BROADCAST
CONTENTS

MONO MEDIA DATA
(VOICE:AIFF, WAB, ACC ...)

MONO MEDIA DATA
(TEXT)

MONO MEDIA DATA
(ANIMATION:MPEG ...)

# FIG.1

FIG.2

IMAGE/VOICE DATA
(CONTENTS OF BROADCAST PROGRAM BODY)

| AV DATA COMPRESSED AND CODED BY MPEG2 AND THE LIKE (AUTOMATIC STARTING FLAG INCLUDED) |
|---|

MULTIPLEXING
(TRANSPORT STREAM)

| MODULE | | | | | | . . . . . . . . |
|---|---|---|---|---|---|---|

DATA BROADCAST CONTENTS (DATA CARROUSEL)

# FIG.3

EP 1 134 918 A1

| RESOURCE LOCATION INFORMATION |
|---|
| DISPLAY/OUTPUT CONTROL PROGRAM<br>(MULTIMEDIA CODING APPLICATION)<br>(XML INSTANCE) |
| SCRIPT<br>(JavaScript, ECMAScript, Jscript AND THE LIKE) |
| VOICE DATA<br>(AIFF, WAV, AAC AND THE LIKE) |
| STILL-PICTURE DATA<br>(JPEG, PNG, GIF AND THE LIKE) |
| ANIMATION DATA<br>(MPEG AND THE LIKE) |
| . . . . . |

# FIG.4

```
┌─────────────────────────────────────────────────────────────────────────────────────────────────────────┐
│  ┌────────────────────┐  ┌────────────────────────────────────────┐  ┌──────────────────────────────┐    │
│  │                    │  │                                        │  │                              │    │
│  │ ┌────────────────┐ │  │         ┌─────────────────────┐        │  │  ┌────────────┐              │    │
│  │ │ XML INSTANCE   │ │  │    ┌───▶│ CONTENTS SENDING 201 │───────┼──┼─▶│ MULTIMEDIA │  ┌──────────┐ │    │
│  │ ├────────────────┤ │  │ L  │    │ SYSTEM              │        │  │  │ CODING     │  │ CONTENTS │ │    │
│  │ │ STYLE SHEET    │─┼──┼▶A──┤    └─────────────────────┘        │  │  │ 301        │  │TRANSMISSION│    │
│  │ └────────────────┘ │  │ N  │                                  │  │  └────────────┘  │   302    │ │    │
│  │                    │  │    │    ┌─────────────────┐ ┌────────┐ │  │                  └──────────┘ │    │
│  │ ┌────────────────┐ │  │    ├───▶│ BASE BAND       │ │AV      │ │  │                              │    │
│  │ │ AV/CAPTION     │─┼──┼▶   │    │ CONTROLLING     │▶│ENCODER │─┼──┼─▶┌──────────────┐           │    │
│  │ │ PRODUCTION     │ │  │    │    │ SYSTEM 202      │ │ 203    │ │  │  │ AV           │           │    │
│  │ └────────────────┘ │  │    │    └─────────────────┘ └────────┘ │  │  │ SUPERIMPOSED │───────▶   │    │
│  │                    │  │    │    ┌─────────────────┐            │  │  │ CAPTION      │           │    │
│  │                    │  │    └───▶│ SUPERIMPOSING 204│───────────┼──┼─▶│ TRANSMISSION │───────▶   │    │
│  │ PRODUCING 100      │  │ SENDING│ CAPTION          │            │  │  │ 303          │           │    │
│  │ SECTION            │  │ SECTION└─────────────────┘  200        │  │  └──────────────┘           │    │
│  └────────────────────┘  └────────────────────────────────────────┘  │ TRANSMITTING  300           │    │
└─────────────────────────────────────────────────────────────────────────────────────────────────────────┘
```

XML INSTANCE
STYLE SHEET
AV/CAPTION PRODUCTION

PRODUCING SECTION 100

LAN

CONTENTS SENDING SYSTEM 201
BASE BAND CONTROLLING SYSTEM 202
AV ENCODER 203
SUPERIMPOSING CAPTION 204

SENDING SECTION 200

MULTIMEDIA CODING 301
CONTENTS TRANSMISSION 302
AV SUPERIMPOSED CAPTION TRANSMISSION 303

TRANSMITTING SECTION 300

SYNTHSIS SECTION 304

MODULATING SECTION 305

RF TRANSMISSION LINE
TO RECEIVING STATION 10

1

**FIG.5**

FIG.6

EP 1 134 918 A1

FIG.7

EP 1 134 918 A1

XML APPLICATION

| XML CONTENTS | XML CONTENTS | XML CONTENTS | ...... | MODEL DEPENDENT APPLICATION ● EPG ● PLUG-IN |

| XML PARSER | XML PROCESSOR |

XML BROWSER

SYSTEM SERVICE (API, Run TimeLibrary)

OPERATING SYSTEM (OS)

HARDWARE CONTROLLING LAYER
(BIOS, DEVICE DRIVER)

| DISPLAY | HDD | KBD | MOUSE | • • • • • • • • • |

# FIG.8

FIG.9

**CONTENTS OF BROADCAST PROGRAM BODY**

MPEG2-AV DATA

**DATA BROADCASTING CONTENTS**

XML — DOCUMENT BODY ONLY

XSL / CSS — STYLE SHEET ONLY

XML / XSL / CSS — DOCUMENT BODY AND STYLE SHEET BANDLED

BROADCAST WAVE (DOWNLOAD)

TRANSMITTING (UPLOAD)

5

BROADCAST STATION 1

RECEIVING SYSTEM 10

TV 18/68

STYLE SHEET SELECTING SECTION 83

(DOWNLOAD)

STYLE SHEET — XSL

DISTRIBUTION

POTABLE MEDIA (STYLE SHEET)

XSL — STYLE SHEET SERVER

INTERNET 50

Web SERVER

DOCUMENT BODY STORAGE SECTION 81

STYLE SHEET STORAGE SECTION 82

HDD 17 OR MEMORY CARD 65

XML
INSTANCE

CONTENTS
ATTRIBUTE
HOLDING
SECTION
85

OUTPUT
ATTRIBUTE
HOLDING
SECTION
85

DISPLAY
18/68

DISTRIBUTION CHANNEL

XSL
#1

BROADCAST
WAVE

XSL
#2

INTERNET

XSL
#3

PORTABLE
RECORDING
MEDIA

STYLE
SHEET
SELECTING
SECTION
83

XSL

HDD 17
OR
MEMORY CARD 65

JUDGING
LOGIC
84

10

**FIG.10**

```
if(0<contents_id<3)
xsl_file=BS-typel.xsl

if(3≦contents_id<5)
xsl_file=BS-type2.xsl

if(5≦contents_id<6)
xsl_file=BS-type3.xsl

if(6≦contents_id<7)
xsl_file=BS-type4.xsl

if(7≦contents_id)
xsl_file=BS-type5.xsl
```

# FIG.11

FIG.12

EP 1 134 918 A1

DATA BROADCAST CONTENTS
(XML INSTANCE)

XML INSTANCE FOR
DISPLAY TYPE #1

XML INSTANCE FOR
DISPLAY TYPE #2

XML INSTANCE FOR
DISPLAY TYPE #3

# FIG.13

STYLE SHEET

XSL DOCUMENT

(DEFINING TRANSCRIPTION SPECIALIZED IN
THE DISPLAY OF HDTV)

Java SCRIPT

(DEFINING PROCESS FOR DISPLAY OTHER THAN
HDTV WITH IF STATEMENT AND THE LIKE)

if (display_type=SDTV)      · · · · · · · · ·
if (display_type=SXGA)      · · · · · · · · ·
if (display_type=XGA)       · · · · · · · · ·
if (display_type=SVGA)      · · · · · · · · ·
if (display_type=VGA)       · · · · · · · · ·

# FIG.14

TEST

**FIG.15A**

TEST

**FIG.15B**

TEST

**FIG.15C**

## INTERNATIONAL SEARCH REPORT

| International application No. |
|---|
| PCT/JP00/06357 |

**A. CLASSIFICATION OF SUBJECT MATTER**
Int.Cl$^7$   H04H 1/00
          H04N 7/173

According to International Patent Classification (IPC) or to both national classification and IPC

**B. FIELDS SEARCHED**

Minimum documentation searched (classification system followed by classification symbols)
Int.Cl$^7$   H04H1/00-1/02       H04N7/00-7/173
          G06F3/14-3/153, 340  G06F13/00, 351-13/00, 357
          G06F17/20-17/26

Documentation searched other than minimum documentation to the extent that such documents are included in the fields searched
   Jitsuyo Shinan Koho          1926-1996   Toroku Jitsuyo Shinan Koho  1994-2000
   Kokai Jitsuyo Shinan Koho    1971-2000   Jitsuyo Shinan Toroku Koho  1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | EP, 0908832, A2, (MATUSHITA ELECTRIC IND CO LTD), 14 April, 1999 (14.04.99), (all document) & JP, 11-175515, A | 1-8,16-23, 31-35,50-54 |
| Y | | 9-15,24-30, 41-44,60-63 69-73 |
| A | | 36-40,45-49, 55-59,64-68, |
| Y | JP, 11-143874, A (Fujitsu Limited), 28 May, 1999 (28.05.99), Column 4, lines 16-30   (Family: none) | 9-15,24-30, 41-44,60-63 69-73 |
| A | Taizou SUEYASU, "WWW Style Gengo no Shin Hyoujun: Hyougenryoku no Oohabana Koujou ga Kitai; XML you no Style Sheet Kikaku XSLno Saishin Draft", Nikkei Internet Technology, No.15, September, 1998, p.18 | 1-73 |
| A | Lect Notes Comput Sci, Vol.1425, TEN KATE W, et al, | 9-15,24-30, |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 December, 2000 (04.12.00) | 26 December, 2000 (26.12.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

**EP 1 134 918 A1**

| C (Continuation). DOCUMENTS CONSIDERED TO BE RELEVANT | | |
|---|---|---|
| Category* | Citation of document, with indication, where appropriate, of the relevant passages | Relevant to claim No. |
| | "Presenting Mullutimedia on the Web and in TV Broadcast", p.56-69 | 41-44,60-63 69-73 |

Form PCT/ISA/210 (continuation of second sheet) (July 1992)

41